(19) Europäisches Patentamt / European Patent Office / Office européen des brevets

(11) **EP 4 583 059 A1**

(12) **EUROPEAN PATENT APPLICATION**

(43) Date of publication:
**09.07.2025 Bulletin 2025/28**

(21) Application number: **25150294.4**

(22) Date of filing: **06.01.2025**

(51) International Patent Classification (IPC):
**G06T 15/06** [(2011.01)]

(52) Cooperative Patent Classification (CPC):
**G06T 15/06; G06T 2210/21**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.01.2024 GB 202400246**

(71) Applicant: **Imagination Technologies Limited Kings Langley, Hertfordshire WD4 8LZ (GB)**

(72) Inventor: **Smith-Lacey, Peter Hertfordshire, WD4 8LZ (GB)**

(74) Representative: **Slingsby Partners LLP 1 Kingsway London WC2B 6AN (GB)**

Remarks:
Amended claims in accordance with Rule 137(2) EPC.

(54) **INTERSECTION TESTING IN A RAY TRACING SYSTEM**

(57) A method and a ray tracing unit are provided for performing intersection testing, in a ray tracing system, for a ray with respect to a primitive. A value of one or more intersection attributes is determined for a primary sample of the ray relating to an intersection between the ray and the primitive in a ray coordinate system. The ray coordinate system has two non-parallel axes that are both transverse to the direction of the ray, and an origin of the ray coordinate system is on the ray. For one or both of the two non-parallel axes of the ray coordinate system, data is determined indicating a change to the one or more intersection attributes in a direction parallel to that axis. The intersection between the ray and the primitive is processed using the determined value of the one or more intersection attributes for the primary sample of the ray and the determined data indicating a change to the one or more intersection attributes in one or both of the directions parallel to the two non-parallel axes.

FIGURE 6

**Description**

CROSS-REFERENCE TO RELATED APPLICATION

This application claims priority from UK patent application 2400246.1 filed on 8 January 2024, which is herein incorporated by reference in its entirety.

TECHNICAL FIELD

The present disclosure is directed to intersection testing in a ray tracing system.

BACKGROUND

Ray tracing is a computational rendering technique for generating an image of a scene by tracing paths of light from the viewpoint of a camera through the scene. The paths of light may otherwise be referred to as rays. Each ray is modelled as originating from the camera and passing through a pixel into the scene. As a ray traverses the scene it may intersect objects within the scene. The interaction between a ray and an object it intersects can be modelled to create realistic visual effects. For example, in response to determining an intersection of a ray with an object, a shader program may be executed in respect of the intersection. A programmer can write the shader program to define how the system reacts to the intersection which may, for example cause one or more secondary rays to be emitted into the scene. For example, secondary rays may represent a reflection of the ray off the intersected object or a refraction of the ray through the object if the object is transparent or translucent. As another example, the shader program could cause one or more rays to be emitted into the scene for the purposes of determining whether the object is in shadow at the intersection point. The result of executing the shader program (and processing the relevant secondary rays) can be the calculation of a colour value for the pixel the ray passed through.

Some operations performed in ray tracing systems involve determining differential data. Differential data indicates the rate of change of an attribute for changes in position, e.g., for changes in a horizontal or a vertical position. For example, the distance from a viewpoint to an object in the scene affects the magnitude of a shift in scene space that corresponds to a shift in the rendering space, e.g., from one pixel position to an adjacent pixel position. This, in turn, may affect the Level of Detail (LOD) with which it is appropriate to represent the object. As a further example, if a surface is at an oblique angle, i.e., if the surface is inclined with respect to the viewpoint from which a scene is being rendered, then a one-pixel shift vertically in the rendering space (or "screen-space") may correspond to a different shift in scene-space than a one-pixel shift horizontally in the rendering space. The gradient data (i.e., differential data) can be useful for various functions in the rendering process, e.g., selecting an appropriate mipmap level of a texture to be applied to a surface in the scene.

Rendering an image of a scene using ray tracing may involve performing many intersection tests of different rays against the objects present in the scene. A ray tracing system may implement billions of intersection tests to render an image of a scene. Intersection testing typically involves complex floating-point arithmetic, which is computationally intensive, and, where the ray tracing system is implemented in hardware, requires a large amount of physical silicon area. Thus, methods for reducing the power consumption, hardware requirements and latency of intersection testing are desirable.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of performing intersection testing, in a ray tracing system, for a ray with respect to a primitive, the method comprising:

> determining a value of one or more intersection attributes for a primary sample of the ray relating to an intersection between the ray and the primitive in a ray coordinate system, wherein the ray coordinate system has two non-parallel axes that are both transverse to the direction of the ray, and wherein an origin of the ray coordinate system is on the ray;

> for one or both of the two non-parallel axes of the ray coordinate system, determining data indicating a change to the one or more intersection attributes in a direction parallel to that axis; and

> processing the intersection between the ray and the primitive using the determined value of the one or more intersection attributes for the primary sample of the ray and the determined data indicating a change to the one or more intersection attributes in one or both of the directions parallel to the two non-parallel axes.

The one or more intersection attributes may describe one or more properties of the intersection between the ray and the primitive.

The one or more intersection attributes may comprise one or more of: (i) one or more barycentric coordinates, (ii) one or more areal coordinates, and (iii) an intersection distance.

For each of said one or both of the two non-parallel axes of the ray coordinate system, the data indicating a change to the one or more intersection attributes in a direction parallel to that axis may comprise a rate of change for each of the one or more intersection attributes in the direction parallel to that axis.

The one or more intersection attributes may comprise one or more barycentric coordinates. Said processing the intersection between the ray and the primitive may comprise using the rate of change for each of the one or more barycentric coordinates in one or both of the directions parallel to said one or both of the two non-parallel axes to determine a Level of Detail (LOD) for the primitive.

Said processing the intersection between the ray and the primitive may comprise:

using the determined Level of Detail for the primitive to select a mipmap level of a texture; and

applying the texture, at the selected mipmap level, to the primitive.

The one or more intersection attributes may comprise two barycentric coordinates. The rates of change of the barycentric coordinates in the directions parallel to the two non-parallel axes may be given by:

$$\frac{\partial u}{\partial p} = \frac{b_q - c_q}{A_\Sigma}$$

$$\frac{\partial u}{\partial q} = \frac{c_p - b_p}{A_\Sigma}$$

$$\frac{\partial v}{\partial p} = \frac{c_q - a_q}{A_\Sigma}$$

$$\frac{\partial v}{\partial q} = \frac{a_p - c_p}{A_\Sigma}$$

where (u, *v*) are the barycentric coordinates, p and q are coordinates on the two non-parallel axes, $(a_p, a_q)$ are coordinates on the two non-parallel axes for a first vertex of the primitive, $(b_p, b_q)$ are coordinates on the two non-parallel axes for a second vertex of the primitive, $(c_p, c_q)$ are coordinates on the two non-parallel axes for a third vertex of the primitive, and $A_\Sigma$ represents an area of the primitive in the ray coordinate system.

The one or more intersection attributes comprise an intersection distance, and wherein the rates of change of the intersection distance in the directions parallel to the two non-parallel axes are given by:

$$\frac{\partial t}{\partial p} = \frac{\frac{\partial u}{\partial p} a_z + \frac{\partial v}{\partial p} b_z + \frac{\partial w}{\partial p} c_z}{D_z}$$

$$\frac{\partial t}{\partial q} = \frac{\frac{\partial u}{\partial q} a_z + \frac{\partial v}{\partial q} b_z + \frac{\partial w}{\partial q} c_z}{D_z}$$

where t is the intersection distance, p and q are coordinates on the two non-parallel axes, (u, *v*) are barycentric coordinates relating to the intersection between the ray and the primitive, $D_z$ is a component having the largest magnitude of the components of a ray direction vector for the ray in a space-coordinate system in which the primitive is defined, $a_z$ is a coordinate for a first vertex of the primitive in the same dimension of the space-coordinate system as $D_z$, $b_z$ is a coordinate for a second vertex of the primitive in the same dimension of the space-coordinate system as $D_z$, and $c_z$ is a coordinate for a third vertex of the primitive in the same dimension of the space-coordinate system as $D_z$.

For each of said one or both of the two non-parallel axes of the ray coordinate system, the data indicating a change to the one or more intersection attributes in a direction parallel to that axis may comprise a value of each of the one or more intersection attributes for a sub-sample of the ray relating to the intersection between the ray and the primitive, the sub-sample of the ray being offset from the primary sample of the ray in the direction parallel to that axis.

The value of each of the one or more intersection attributes for the sub-sample of the ray may be determined by applying one or more logical operations to the value of a corresponding one of the one or more intersection attributes determined for the primary sample of the ray, wherein the one or more logical operations may comprise: (i) one or more addition operations, (ii) one or more subtraction operations, and/or (iii) one or more multiplication operations.

Said processing the intersection between the ray and the primitive may comprise using the one or more intersection attributes for the sub-sample of the ray to determine whether the sub-sample of the ray hits the primitive.

The method may comprise determining values of the one or more intersection attributes for a plurality of sub-samples of the ray at different offsets from the primary sample of the ray.

The method may further comprise:

determining whether each of the samples of the ray hits the primitive based on the determined values of the one or more intersection attributes for that sample of the ray; and

using the determinations of whether each of the samples of the ray hits the primitive to determine an output value representing an intersection of the ray with scene geometry, wherein the intersection of the ray with the scene geometry comprises the intersection between the ray and the primitive, and

wherein the samples of the ray comprise the primary sample and the plurality of sub-samples of the ray.

Said using the determinations of whether each of the samples of the ray hits the primitive to determine an output value representing an intersection of the ray with scene geometry may comprise:

for each of the samples of the ray that are determined to hit the primitive, determining a contribution from the primitive to the output value; and

using the determined contributions for the samples of the ray that are determined to hit the primitive to determine the output value representing the intersection of the ray with the scene geometry.

For each of the samples of the ray, the contribution may be weighted based on a position of the sample relative to the primary sample.

The one or more intersection attributes may comprise a plurality of areal coordinates. Said determining values of the one or more intersection attributes for a plurality of sub-samples of the ray may comprise determining at least two areal coordinates for each of the plurality of sub-samples by adding and/or subtracting values to and/or from the corresponding areal coordinates determined for the primary sample of the ray. Said determining whether each of the samples of the ray hits the primitive may comprise determining whether each of the samples of the ray hits the primitive based on the signs of the areal coordinates determined for the sample.

The areal coordinates for the primary sample, $(A_0, A_1A_2)$, may be given by:

$$A_0 = b_p c_q - b_q c_p$$

$$A_1 = c_p a_q - c_q a_p$$

$$A_2 = a_p b_q - a_q b_p$$

and the areal coordinates for a sub-sample $(A'_0, A'_1A'_2)$ may be given by:

$$A'_0 = A_0 + p'\left(b_q - c_q\right) + q'\left(c_p - b_p\right)$$

$$A'_1 = A_1 + p'\left(c_q - a_q\right) + q'\left(a_p - c_p\right)$$

$$A'_2 = A_2 + p'(a_q - b_q) + q'(b_p - a_p)$$

where p' and q' represent the offset of the sub-sample relative to the primary sample on the two non-parallel axes, $(a_p, a_q)$ are coordinates on the two non-parallel axes for a first vertex of the primitive, $(b_p, b_q)$ are coordinates on the two non-parallel axes for a second vertex of the primitive, and $(c_p, c_q)$ are coordinates on the two non-parallel axes for a third vertex of the primitive.

The plurality of sub-samples of the ray may comprise four sub-samples of the ray at respective offsets of (-1,0), (+1,0), (0,-1) and (0,+1) from the primary sample of the ray in the ray coordinate system.

The plurality of sub-samples of the ray may comprise eight sub-samples of the ray at respective offsets of (-1,-1), (-1,0), (-1,+1), (0,-1), (0,+1), (+1,-1), (+1,0) and (+1,+1) from the primary sample of the ray in the ray coordinate system.

A spread value for the ray may be used to determine the offset of the sub-sample of the ray from the primary sample of the ray.

The spread value may be set such that the offset of the sub-sample of the ray from the primary sample of the ray is less than an offset between primary samples of different rays corresponding to adjacent pixels of a frame to be rendered.

The spread value may represent an orthographic spread or a pseudo-perspective spread of the ray.

The method may further comprise obtaining coordinate data for vertices of the primitive in the ray coordinate system. Said obtaining coordinate data for vertices of the primitive in the ray coordinate system may comprise projecting coordinate data for the vertices of the primitive from a space-coordinate system in which the primitive is defined into the ray coordinate system using ray data defining the ray.

Said processing the intersection between the ray and the primitive may comprise:

> providing, as inputs to a shader program, the determined value of the one or more intersection attributes for the primary sample of the ray and the determined data indicating a change to the one or more intersection attributes in one or both of the directions parallel to the two non-parallel axes; and

> executing the shader program using the provided inputs.

Said processing the intersection between the ray and the primitive may comprise determining an output value representing the intersection of the ray and the primitive for use in rendering an image of a scene which includes the primitive.

The two non-parallel axes of the ray coordinate system may both be orthogonal to the direction of the ray.

There is provided a ray tracing unit configured to perform intersection testing for a ray with respect to a primitive, the ray tracing unit being configured to:

> determine a value of one or more intersection attributes for a primary sample of the ray relating to an intersection between the ray and the primitive in a ray coordinate system, wherein the ray coordinate system has two non-parallel axes that are both transverse to the direction of the ray, and wherein an origin of the ray coordinate system is on the ray;

> determine, for one or both of the two non-parallel axes of the ray coordinate system, data indicating a change to the one or more intersection attributes in a direction parallel to that axis; and

> process the intersection between the ray and the primitive using the determined value of the one or more intersection attributes for the primary sample of the ray and the determined data indicating a change to the one or more intersection attributes in one or both of the directions parallel to the two non-parallel axes.

There may be provided a ray tracing unit configured to perform any of the methods described herein.

There may be provided a method of manufacturing, using an integrated circuit manufacturing system, any of the ray tracing units described herein.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture any of the ray tracing units described herein.

The ray tracing unit may be embodied in hardware on an integrated circuit. There may be provided a method of manufacturing, at an integrated circuit manufacturing system, a ray tracing unit. There may be provided an integrated circuit definition dataset that, when processed in an integrated circuit manufacturing system, configures the system to manufacture a ray tracing unit. There may be provided a non-transitory computer readable storage medium having stored thereon a computer readable description of a ray tracing unit that, when processed in an integrated circuit manufacturing system, causes the integrated circuit manufacturing system to manufacture an integrated circuit embodying a ray tracing unit.

There may be provided an integrated circuit manufacturing system comprising: a non-transitory computer readable storage medium having stored thereon a computer readable description of the ray tracing unit; a layout processing system configured to process the computer readable description so as to generate a circuit layout description of an integrated circuit embodying the ray tracing unit; and an integrated circuit generation system configured to manufacture the ray tracing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a ray tracing system configured to perform intersection testing for a ray with respect to a primitive;

Figure 2 is a flow chart for a method of performing intersection testing, in a ray tracing system, for a ray with respect to a primitive;

Figure 3 shows an intersection between a ray and a primitive in a space-coordinate system in which the primitive is defined;

Figure 4 shows the primitive of Figure 3 in a ray coordinate system;

Figure 5 illustrates a first example in which the positions of a primary sample and two sub-samples of a ray are shown relative to a primitive in the ray coordinate system;

Figure 6 illustrates a second example in which the positions of a primary sample and four sub-samples of a ray are shown relative to a primitive in the ray coordinate system;

Figure 7 illustrates a third example in which the positions of a primary sample and eight sub-samples of a ray are shown relative to a primitive in the ray coordinate system;

Figure 8 is a flow chart showing an example of steps that can be performed as part of step S208.

Figure 9 illustrates a primitive and a ray having an orthographic spread in a space-coordinate system in which the primitive is defined;

Figure 10 illustrates a primitive and a ray having a pseudo-perspective spread in a space-coordinate system in which the primitive is defined;

Figure 11 shows a computer system in which a ray tracing unit is implemented; and

Figure 12 shows an integrated circuit manufacturing system for generating an integrated circuit embodying a ray tracing unit.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, differential data (or "delta values") indicates the rate of change of an intersection attribute for changes in position, e.g., from one pixel to the next. Differential data may be used for a number of different purposes during rendering, e.g., for Level of Detail (LCD) selection. Two of the main techniques for implementing graphics rendering are rasterisation and ray tracing. It is relatively difficult to determine differential data in a ray tracing system compared to determining differential data in a rasterisation system. This is because the rays that are processed in a ray tracing system tend to be divergent (and therefore are generally handled independently). In particular, rays for adjacent pixels diverge from each other as they traverse a scene and may intersect different objects and/or surfaces at different angles such that secondary rays for adjacent primary rays can be in significantly different directions. The divergence between rays tends to increase as more reflections (or "bounces") are considered. It would be possible to traverse additional rays through the scene for the purposes of determining differential data, but this would result in a large increase in the number of rays that are processed (e.g., 4x), which is not feasible from a performance perspective, particularly for real-time ray tracing on low-cost devices, e.g. on devices which have tight restrictions on size and/or power consumption, such as mobile devices.

A ray, $r$, is typically considered to be an infinitely thin line, represented with an origin, $O$, and a direction vector, $D$, such that $r = O + tD$, where t indicates a position along the ray from the ray origin. In examples described herein, a ray is considered to be a line with a finite (but greater than zero in the standard case) thickness (that is, a line that is not infinitely thin), wherein a primary sample of the ray represents the conventional line of the ray, and wherein one or more sub-samples of the ray are offset slightly from the primary ray and are used for determining differential data. As described in more detail below, a spread value ($\sigma$) for a ray represents the thickness of the ray, and is used to determine the offsets of the sub-samples from the primary sample of the ray. To give two examples, the spread of the ray may be processed as orthographic spread or pseudo-perspective spread, as described in more detail below.

In examples described herein, intersection testing is performed in a ray coordinate system. The ray coordinate system is specific for the ray for which intersection testing is being performed. In particular, the ray coordinate system in the examples described herein has one axis (denoted "$S$" in the description below) which is parallel to the ray direction and two non-parallel axes (denoted "$P$" and "$Q$" in the description below) which are both orthogonal to the ray direction. The origin of the ray coordinate system is at a point on the ray, e.g., at the ray origin. Therefore, in these examples, the intersection testing can be performed in the plane of the two non-parallel axes ($P$ and $Q$) of the ray coordinate system, wherein the primary sample of the ray is represented as a point at the origin in the $PQ$ plane.

Values of one or more intersection attributes (such as barycentric coordinates, areal coordinates, and/or an intersection distance) are calculated for the primary sample of the ray, e.g., in a conventional manner. In examples described herein data is determined indicating changes to the intersection attributes in directions parallel to the $P$ and $Q$ axes of the ray coordinate system. The determination of the data indicating changes to the intersection attributes in directions parallel to the $P$ and $Q$ axes in the ray coordinate system is simple to implement, e.g., in fixed function circuitry. For example, this determination may involve operations, such as additions and/or subtractions, that are simple to implement (e.g., in hardware). The simplicity of the determination reduces the latency, power consumption and/or silicon area of the ray tracing system. For example, the data indicating the changes to the intersection attributes in directions parallel to the $P$ and $Q$ axes may comprise rates of change for the intersection attributes in the directions parallel to the $P$ and $Q$ axes in the ray coordinate system. As another example, the data indicating the changes to the intersection attributes in directions parallel to the $P$ and $Q$ axes may comprise values of the intersection attributes for the sub-samples of the ray which are offset from the primary sample of the ray in the directions parallel to the $P$ and $Q$ axes.

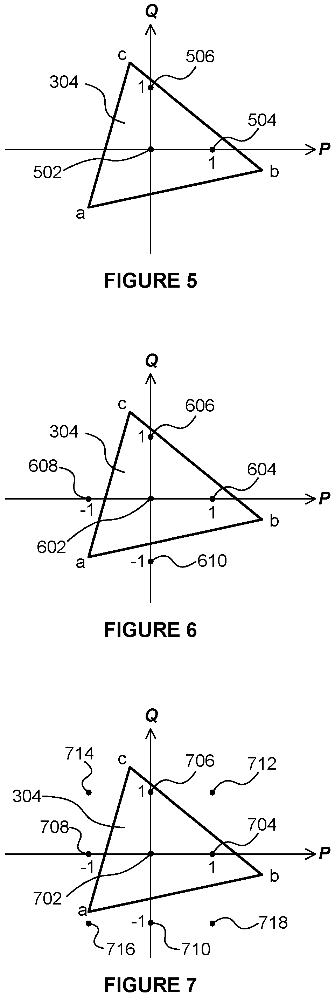

In examples described herein, each of the sub-samples of the ray is offset from the primary sample of the ray (i.e., offset from the origin of the ray coordinate system) in the $PQ$ plane by a set of one or more steps having a magnitude of 1 (i.e., a unit amount) in directions parallel to the $P$ or $Q$ axes. The sets of one or more steps for the sub-samples may have up to a maximum number of steps. The maximum number of steps is a small number, e.g., 1, 2, 3, 4 or 5. In some of the examples described below (e.g., the examples shown in Figures 5 and 6) the sets of one or more steps for the sub-samples each have a single step, i.e., the maximum number of steps is 1. It is very simple to determine the intersection attributes for the sub-samples of the ray, e.g., by applying one or more increments and/or decrements (i.e. additions and/or subtractions) to the values of the corresponding intersection attributes determined for the primary sample of the ray.

In a different, naive approach, values of intersection attributes could be determined for separate sub-rays which are slightly offset from a main ray by traversing these separate sub-rays through the scene and performing separate intersection testing calculations for these separate sub-rays in a conventional manner (in a similar manner to the intersection testing calculations performed for the primary sample of the ray). The values of the intersection attributes for the sub-rays could then be used to determine differential data indicating the rates of change of the intersection attributes for changes in position. However, this naive approach would involve traversing far more rays through the scene, so the amount of processing required would be greatly increased (and therefore result in greater latency, power consumption and/or silicon area for the ray tracing system), compared to the methods described herein in which the data is determined indicating changes to the intersection attributes in directions parallel to the $P$ and $Q$ axes of the ray coordinate system. In other words, the methods described herein provide sub-ray data (i.e., super-sample information) at reduced additional overhead compared to traditional intersection testing, and without having to trace multiple rays per pixel, with all their potential divergence issues (as in the naive approach), to achieve similar results in terms of the quality of the rendered images.

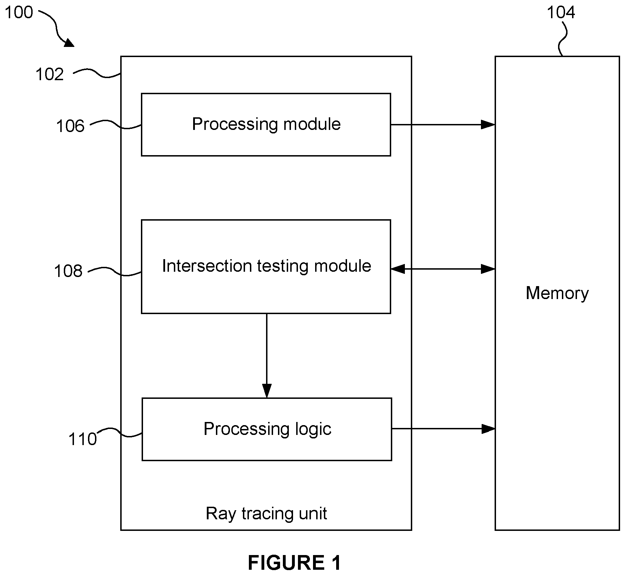

Figure 1 shows a ray tracing system 100 that is configured to perform intersection testing. Intersection testing is performed to render an image of a scene (e.g., a 3D scene). Rendering an image of a scene using ray tracing may involve performing many intersection tests. The ray tracing system comprises a ray tracing unit 102 and a memory 104. The ray tracing unit 102 comprises a processing module 106, an intersection testing module 108 and processing logic 110. Although it is not shown in Figure 1, the intersection testing module 108 may comprise one or more box intersection testing modules and/or one or more primitive intersection testing modules. In operation the ray tracing unit 102 receives geometric data defining objects within the 3D scene. Objects may be represented using one or more primitives, and the geometric data can include primitive data defining the primitives. A primitive may have a planar shape, e.g., a triangular shape, and may be represented as a set of vertices, wherein the primitive data defining the primitive may include vertex data associated with the vertices of the primitive. The processing module 106 is configured to generate an acceleration structure based on the geometric data, and to send the acceleration structure to the memory 104 for storage therein. After the acceleration structure has been stored in the memory 104, the intersection testing module 108 can retrieve nodes of the acceleration structure from the memory 104 to perform intersection testing of rays against the retrieved nodes. The results of the intersection testing are provided to the processing logic 110. The processing logic 110 is configured to process the results of the intersection testing to determine processed values representing the image of the 3D scene. The processed values determined by the processing logic 110 can be passed back to the memory 104 for storage therein to represent the image of the 3D scene.

Generally, when performing intersection testing of a ray with a primitive, the ray is defined in terms of components (i.e., coordinates) in a space-coordinate system in which the primitive is defined. However, ray data that defines a ray may be used to derive a ray coordinate system which is relative to the ray itself, such that primitives that are to be tested for intersection with a given ray can be mapped onto the ray coordinate system derived from the data of that ray. The term "space-coordinate system" is used herein to refer to the coordinate system in which the primitive is defined. For example, the "space-coordinate system" may be a world space-coordinate system or an instance space-coordinate system. In most of the examples described herein the space-coordinate system is a three-dimensional coordinate system. The shape, size and position of a primitive may be defined as a region of three-dimensional space contained entirely within a plane of the three-dimensional coordinate system and may be bounded by $n \geq 3$ line segments. Each of the interior angles of the primitive may be less than or equal to 180°. Primitives with all interior angles of less than or equal to 180° are referred to as convex polygons. A strictly convex polygon is a convex polygon such that all interior angles are strictly less than 180°.

The terms "ray coordinate system" and "ray space", may be used herein to refer to a coordinate system that is specific to a ray, and which has its origin on the ray. In the examples described in detail herein the origin of the ray coordinate system is the origin of the ray, but in other examples, any point on the ray (i.e. any point along the ray's line) could be used as the origin of the ray coordinate system, with a suitable adjustment to minimum and maximum culling distances for the ray ($t_{min}$ and $t_{max}$). The ray coordinate system has three basis vectors corresponding to three axes. A first of the basis vectors is aligned with the ray direction. The second and third basis vectors are transverse (or non-parallel relative) to the first basis vector (i.e., transverse to the direction of the ray). The second and third of the basis vectors may be (but are not necessarily) both orthogonal to the first basis vector (i.e., orthogonal to the ray direction), and are not parallel with each other. The second and third basis vectors of the ray coordinate system are not, in general, orthogonal to each other, although in some examples they may be orthogonal to each other. The ray-space frame of reference associated with the two non-parallel axes (the $P$ and $Q$ axes described below) corresponding to the second and third basis vectors is centred at a point on the ray such that the ray is represented as that point on the two non-parallel axes in the ray space, and where that point is the origin of the ray space. In other words, in ray space, the ray is located at the intersection of the two non-parallel axes corresponding to the second and third basis vectors and, when considered in world/instance space, the origin of the ray space is located on the ray. In examples described herein, the second and third basis vectors of the ray coordinate system have a 0 as one component when expressed in the space-coordinate system. In some examples, the second and third of the basis vectors of the ray coordinate system have a value of $\pm 1$ (i.e., a magnitude of 1) for one component when expressed in the space-coordinate system.

In examples described below, the ray coordinate system is used by the intersection testing module 108 to perform intersection testing to determine whether a ray intersects a primitive. A result of performing the intersection testing for the ray with respect to the primitive is output from the intersection testing module 108 for use by the ray tracing system 100, e.g., for use in determining which shader program(s) is(are) executed by the processing logic 110 to process the intersection between the ray and the primitive.

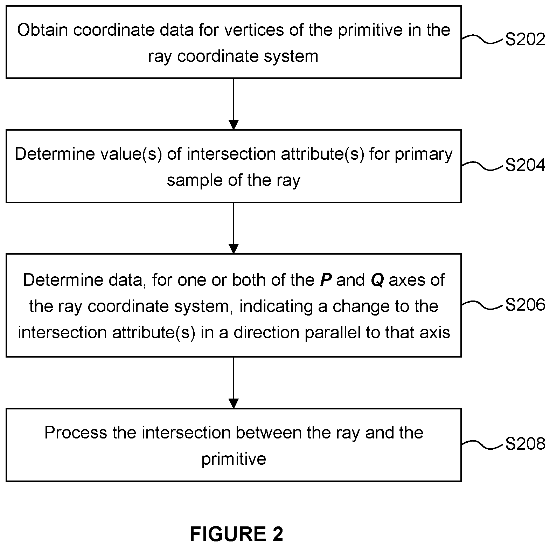

A method of performing intersection testing, in the ray tracing system 100, for a ray with respect to a primitive is described with reference to the flow chart shown in Figure 2.

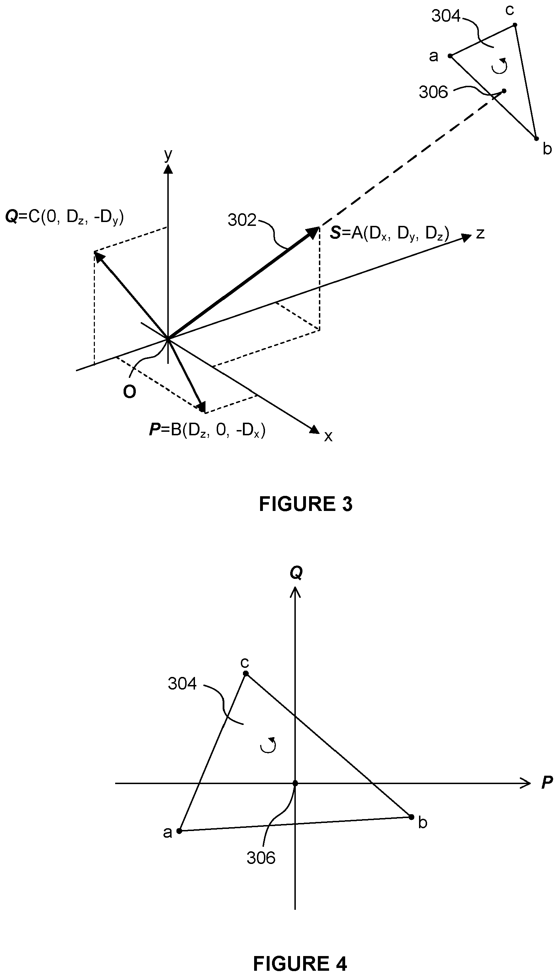

Furthermore, Figure 3 shows an intersection between a ray 302 and a primitive 304 in a space-coordinate system in which the primitive is defined. The ray 302 and the primitive 304 are presented for intersection testing. In this example, the primitive 304 is a (strictly) convex polygon. More specifically, the primitive 304 is a triangle. The orientation of the primitive is indicated as anti-clockwise, as viewed and from the ray's perspective (i.e., with the ray direction "into the page"). The primitive 304 is defined by the ordered set of vertices ($a, b, c$). Each vertex has a set of coordinate values in the space-coordinate system, where each coordinate value is a measurement of the vertex along a corresponding axis of the space-coordinate system. For the primitive 304, the first vertex $a$ may have a set of coordinates ($a_x, a_y, a_z$), the second vertex $b$ may have a set of coordinates ($b_x, b_y, b_z$) and the third vertex c may have a set of coordinates ($c_x, c_y, c_z$) in the space-coordinate system. Each pair of vertices of the primitive 304 may define a corresponding edge of the primitive. The primitive 304 comprises three edges: a first edge defined by vertices ($a, b$), a second edge defined by vertices ($b, c$) and a third edge defined by vertices ($c, a$). As described above, the ray 302, $r(t)$, can be represented as $r(t) = O + Dt$, where $O$ is a vector representing the origin of the ray and $D$ is the direction vector of the ray, where $O = (O_x, O_y, O_z)$ and $D = (D_x, D_y, D_z)$. The x, y and z basis vectors of the space-coordinate system are shown in Figure 3. As described above, the space-coordinate system could be a world space coordinate system of a scene being rendered, or the space-coordinate system could be the instance space-coordinate system of an instanced set of geometry within a scene being rendered.

In step S202 the ray tracing unit 102 (in particular, the intersection testing module 108) obtains coordinate data for vertices of the primitive 304 in the ray coordinate system. As described above, the ray coordinate system has two non-parallel axes ($P$ and $Q$) that are both transverse (e.g., orthogonal) to the direction of the ray, and an origin of the ray coordinate system is on the ray. In particular, in the example shown in Figure 3, the origin of the ray coordinate system that is used in the intersection testing is the origin of the ray 302. The positions of the vertices defining the primitive 304 are translated by subtracting the ray origin from the positions of the vertices. Figure 3 shows the primitive 304 after this translation has been performed, with the origin of the space-coordinate system at the origin of the ray 302. In the example shown in Figure 3, the ray 302 intersects the primitive 304 at an intersection point 306. The basis vectors of the ray coordinate system are represented as $P$, $Q$ and $S$, in Figure 3.

The x, y and z axes are selectively permuted and/or reversed. In particular, the x, y and z components of the ray and the vertices defining the convex polygons are selectively permuted and/or reversed, such that $D_z \geq D_x \geq 0$ and $D_z \geq D_y \geq 0$. This ensures that $D_z$ is the major component of the ray direction vector, i.e., $|D_z| \geq |D_x|$ and $|D_z| \geq |D_y|$ for the permuted but unreversed components. Furthermore, since any valid ray direction vector has a non-zero magnitude this means that $|D_z| > 0$ for the permuted but unreversed component.

The first basis vector, $S$, of the ray coordinate system is set to be along the direction of the ray, $S = A(D_x, D_y, D_z)$, where A is a non-zero scalar value. Therefore, the S axis of the ray coordinate system is parallel to the ray direction vector. The origin of the ray coordinate system illustrated in Figure 3 is located at the intersection between the $P$, $Q$ and $S$ axes, at position $O$.

The second and third basis vectors, $P$ and $Q$, are defined to be $P = B(D_z, 0, -D_x)$ and $Q = C(0, D_z, -D_y)$, where B and C are non-zero scalar values. As shown in the example of Figure 3, $S$ is orthogonal to $P$ and to $Q$, which can be seen in that $P.S = Q.S = 0$. However, depending on the values of $D_x$ and $D_y$, $P$ and $Q$ are not necessarily orthogonal to each other. For example, unless $D_x$ or $D_y$ is zero then $P$ and $Q$ will not be orthogonal to each other. It is noted again that $D_z$ cannot be zero because of the selective permutation of the axes such that $D_z$ is the major component of the ray direction. As described in more detail below, a (strictly positive) spread value ($\sigma$) for a ray is used to determine the offsets of sub-samples of the ray from a primary sample of the ray. To give a first example, the spread of the ray may be processed as orthographic spread, in which case the scalar values B and C may be defined as $B = \dfrac{1}{\sigma\sqrt{D_x^2 + D_z^2}}$ and $C = \dfrac{1}{\sigma\sqrt{D_y^2 + D_z^2}}$, where division by the square root term normalises each of the $P$ and $Q$ axes, and where division by the spread value ($\sigma$) shortens the two axes resulting in bigger gaps between samples in ray space. These divisions happen once per ray at its generation, and therefore do not need to be performed on-the-fly during ray versus primitive intersection testing. To give a second example, the spread of the ray may be processed as pseudo-perspective spread, in which case the scalar values B and C may be defined as

$B = \dfrac{|D_z|}{\sigma\sqrt{D_x^2 + D_z^2}}$ and $C = \dfrac{|D_z|}{\sigma\sqrt{D_y^2 + D_z^2}}$, where multiplication by the magnitude of the major component ($|D_z|$) accounts for the length of the ray when scaling the sample points in response to a distance value (given as a multiple of ray lengths). This is used where the spread of perspective samples is expected to be proportional to a Euclidean distance, otherwise the numerator can be set to 1 as in the orthographic case. This is explained in more detail below.

Figure 4 shows the primitive 304 in the ray coordinate system. In particular, Figure 4 illustrates the primitive 304 having been projected onto the pair of axes aligned with the basis vectors $P$ and $Q$ (i.e., the second and third basis vectors of the ray coordinate system). Thus, the primitive of Figure 4, looking "into the page", is observed from the point of view of the ray (i.e., positioning an "eye" at the ray's origin and "looking" along the ray direction vector). In the example illustrated in Figure 4, the $P$ and $Q$ axes are perpendicular (i.e., orthogonal) to the direction of the ray 302 and perpendicular to each other. The $P$ and $Q$ axes, together with the $S$ axis which is directed into the page, define the "ray space" of the ray 302. The ray origin $O$ from Figure 3 is shown at the origin of the reference frame defined by axes $P$ and $Q$, as the frame of reference is illustrated from the viewpoint of the ray, i.e., the ray origin $O$ and the intersection point 306 now coincide. The ray direction is directed into the page, e.g., with the components of the ray direction vector along the $P$ and $Q$ axes as zero. Therefore, the ray is a point at the origin of the $PQ$ plane of the ray coordinate system shown in Figure 4, and, in particular, the intersection position 306 representing the intersection of the ray with the primitive 304 is at the origin in Figure 4. Figure 4 indicates that the orientation of the primitive 404 appears as anti-clockwise in Figure 4, as determined by the winding order of its vertices. The winding order of a primitive is the order of the vertices that define that primitive, but ignoring any cyclical factor. In other words, only "odd" permutations of vertices are considered to represent a different winding order between one primitive and another. Thus, a first primitive may be determined to be distinct from a second primitive even if both primitives are defined by the same vertices, if the order of those vertices differs between the two primitives by an odd permutation (e.g., ordered back to front). In Figure 4, the ray coordinate system basis vectors $P$ and $Q$ are shown at a right angle to each other even though they may not be orthogonal in the space-coordinate system, where this implicit "shear" does not affect subsequent hit or intersection attribute calculations. Each vertex of the primitive 304 is defined by a set of coordinate values in the ray coordinate system, where each coordinate value is a measurement of the vertex along a corresponding axis of the ray coordinate system. For the primitive 304, the first vertex $a$ may have a first set of ray-space coordinates $(a_p, a_q, a_s)$, the second vertex $b$ may have a second set of coordinates $(b_p, b_q, b_s)$ and the third vertex $c$ may have a third set of coordinates $(c_p, c_q, c_s)$ in the ray coordinate system. In some examples, the vertex coordinates along the $S$ axis $(a_s, b_s$ and $c_s)$ for each ray-space vertex may not be calculated when performing intersection testing for a primitive. That is, it may be possible to determine intersection distances without calculating the third ray-space coordinate, by explicit projection along the $S$ axis, of each vertex in that primitive.

The ray coordinate system may either be left-handed or right-handed. In Figure 4 the ray coordinate system (with axes ordered as either $PQS, SPQ,$ or $QSP$) is left-handed. In this coordinate system, the second axis (the $Q$ axis) is directed upwards, and the first axis (the $P$ axis) is directed from left to right. In a right-handed system one of the $P$ or $Q$ axes is reversed so that either the $Q$ axis is directed downwards, or the $P$ axis is directed from right to left (or alternatively the axes are reordered as either $QPS, SQP,$ or $PSQ$). A left-handed coordinate system may be described as an anticlockwise system as the rotation from the first to second basis vector, as viewed in Figure 4, is in an anticlockwise direction. A right-handed system may be described as a clockwise system as the rotation from the first to second basis vector, as viewed in Figure 4, would be in a clockwise direction. The handedness of the system may affect the perceived primitive orientation (given a fixed primitive winding). For example, a right-handed coordinate system may reverse primitive orientation and a left-handed coordinate system may preserve primitive orientation, with respect to the point of view of the ray as shown in Figure 4. To indicate the handedness of the ray coordinate system, a winding flag may be supplied to the user, to set when a space coordinate system of handedness opposite to expected is required. This winding flag indicates that any intersection orientation result should be reversed; one way to achieve this is to indicate that all primitive edges should be treated as pointing in the opposite direction.

In some examples, in step S202 the intersection testing module 108 obtains the coordinate data for the vertices ($a$, $b$ and $c$) of the primitive 304 in the ray coordinate system by projecting the coordinate data for the vertices of the primitive from the space-coordinate system in which the primitive is defined into the ray coordinate system using ray data defining the ray. The projection into the ray coordinate system can be performed as described above. The ray data defining the ray comprises the ray origin, $O$, and the ray direction vector, $D$, and the spread value, $\sigma$, for the ray. In other examples, the intersection testing module 108 does not perform the projection of the coordinate data for the vertices of the primitive from the space-coordinate system into the ray coordinate system. In these other examples, the projection is performed by a different module in the ray tracing system, e.g., in a pre-processing step, and the results of the projection are provided to the intersection testing module 108. Therefore, in these other examples, in step S202 the intersection testing module 108 obtains the coordinate data for the vertices ($a$, $b$ and $c$) of the primitive 304 in the ray coordinate system by receiving the coordinate data for the vertices of the primitive in the ray coordinate system.

In step S204 the ray tracing unit 102 (in particular the intersection testing module 108) determines a value of one or more intersection attributes for a primary sample of the ray 302 relating to an intersection between the ray 302 and the primitive 304. As described above, the primary sample of the ray represents the line of the ray, i.e., as $O + Dt$. In the $PQ$ plane of the ray coordinate system, the primary sample of the ray is represented as a point at the origin. In the example shown in Figures 3 and 4, the primary sample of the ray 302 intersects the primitive 304 at the intersection point 306. The intersection attributes describe properties of the intersection between the ray and the primitive. The values of the intersection attributes may be output from the intersection testing module 108 and provided to the processing logic 110. The intersection attributes can be used (e.g., by a shader program executed on the processing logic 110) to determine how to process the intersection between the ray and the primitive, e.g., for use in rendering an image of the scene. To give some examples, each of the one or more intersection attributes may be a barycentric coordinate, an areal coordinate, and/or an intersection distance. Techniques for determining the value(s) of the intersection attribute(s) for the primary sample of the ray 302 are known in the art.

Performing intersection testing on the primitive 304 in ray space is advantageous as it reduces the testing to a 2D problem. The primary sample of the ray is determined to intersect the primitive only if the primitive covers the origin of the $P$ and $Q$ axes in ray space. Areal coordinates $A_0$, $A_1$ and $A_2$ can be determined for the intersection between the primary sample of the ray 302 and the primitive 304, wherein the first areal coordinate $A_0 = b_p c_q - b_q c_p$, the second areal coordinate $A_1 = c_p a_q - c_q a_p$, and the third areal coordinate $A_2 = a_p b_q - a_q b_p$, where $(a_p, a_q)$ are the coordinates on the $P$ and $Q$ axes for vertex $a$ of the primitive 304, $(b_p, b_q)$ are the coordinates on the $P$ and $Q$ axes for vertex & of the primitive 304, and $(c_p, c_q)$ are the coordinates on the $P$ and $Q$ axes for vertex c of the primitive 304. Each of the areal coordinates is calculated as a "2D cross product" of two of the projected vertices defining an edge of the primitive 304 and is indicative of which side of that edge of primitive 304 the ray passes on, relative to the direction of the edge (which is embedded in the order of the components in the definition of the $A_i$). The areal coordinates have signed values and may be positive, negative or zero.

Once the areal coordinates have been determined for the intersection between the primary sample of the ray 302 and the primitive 304, then the intersection testing module 108 can determine whether the primary sample of the ray 302 intersects the primitive 304 based on the signs of the areal coordinates. In an example, if all of the areal coordinates ($A_0$, $A_1$ and $A_2$) determined for the intersection between the ray 302 and the primitive 304 have the same sign then it is determined that the primary sample of the ray intersects the primitive, whereas if it is not the case that all of the areal coordinates ($A_0$, $A_1$ and $A_2$) determined for the intersection between the ray 302 and the primitive 304 have the same sign then it is determined that the primary sample of the ray does not intersect the primitive. That is, intersection testing for the primary sample of the ray with respect to the primitive may comprise using the areal coordinates determined for the intersection between the primary sample of the ray and the primitive to determine whether the primary sample of the ray passes on the "inside" of the edges of the primitive when the (convex) primitive is considered as a whole, where it is determined that the primary sample of the ray intersects the primitive if it is determined that the primary sample of the ray passes on the inside of all the edges of the primitive. Similarly, it is determined that the primary sample of the ray does not intersect the primitive if it is determined that the primary sample of the ray passes "outside" one or more of the edges of the primitive. It is noted that until all of the edges have been examined, it can be determined which side of an edge (specifically which side of the infinite line extending from that edge) the primary sample of the ray passes on, but it is not known which side corresponds to "inside" and which side corresponds to "outside". As such, the determinations of whether the primary sample of the ray passes on the inside or the outside of the edges may be made once all edges of the polygon have been examined. If an intersection does not occur, i.e., there are some edges of one sign and some edges of the other sign, then it is known that the primary sample of the ray passes on the "outside" of one or more of the edges, but it might not be known which subset of the edges those are. This is because a sign can be matched to a meaning of "outside" when the orientation of the polygon is known, but the orientation is not generally known for a miss.

Barycentric coordinates may be determined for the intersection between the primary sample of the ray 302 and the primitive 304. Barycentric coordinates indicate where the intersection point 306 is located on the primitive 304. A full set of barycentric coordinates typically comprises three barycentric coordinates (u, v, w), and may be determined from the areal coordinates by normalisation as $u = \frac{A_0}{A_\Sigma}$, $v = \frac{A_1}{A_\Sigma}$ and $w = \frac{A_2}{A_\Sigma}$, where $A_\Sigma$ is the sum of the areal coordinates and represents the total area of the primitive 304 in the $PQ$ plane of the ray coordinate system, i.e. $A_\Sigma = A_0 + A_1 + A_2$. It can be appreciated from the way the barycentric coordinates are defined relative to the areal coordinates that the sum of the barycentric coordinates will always be 1 (i.e., they are normalised). As such, typically only two of the barycentric coordinates (e.g., u and v) are explicitly determined, and the third barycentric coordinate (e.g., w) is not explicitly determined but can be inferred from the values of the other two barycentric coordinates, e.g., as w = 1 - u - v.

A (signed) intersection distance, t, may be determined using the barycentric coordinates (u, v, w), according to $t = \frac{1}{D_z}(u(a_z - O_z) + v(b_z - O_z) + w(c_z - O_z)) = \frac{1}{D_z}(ua_z + vb_z + wc_z - O_z)$, where as described above $D_z$ is the major component of the ray direction vector in the space-coordinate system, where $a_z$, $b_z$ and $c_z$ are the z components of the vertices $a$, $b$ and $c$ in the space-coordinate system and $O_z$ is the z component of the ray origin in the space-coordinate system. It is noted again that $u + v + w = 1$. The sign of the intersection distance t indicates whether the intersection occurs in front of or behind the ray origin, relative to the direction of the ray.

In step S206, for one or both of the $P$ and $Q$ axes of the ray coordinate system, the ray tracing unit 102 (e.g., the intersection testing module 108) determines data indicating a change to the intersection attribute(s) in a direction parallel to that axis.

Performing intersection testing by projecting vertex coordinates into a ray coordinate system for the ray and determining areal coordinates as 2D cross products, as described above, may be seen to be computationally expensive. For this reason, it is advantageous for the number of separate rays (e.g., the number of sampling rays per pixel) for which this intersection testing process is performed to be minimised. Therefore, for the purposes of determining differential data, it would be desirable to avoid projecting vertex coordinates into slightly offset ray coordinate systems for slightly offset rays (i.e., sub-rays) and performing separate 2D cross products for each of those sub-rays (i.e., sub-samples) for determining whether and where those sub-samples of the ray intersect the primitive. The way in which step S206 is performed is different in various examples, as described in more detail below.

In step S208, the ray tracing unit 102 (e.g., the intersection testing module 108 and/or the processing logic 110) processes the intersection between the ray and the primitive using the determined value(s) of the intersection attribute(s) for the primary sample of the ray and the determined data indicating a change to the intersection attribute(s) in one or both of the directions parallel to the P and Q axes. For example, in step S208 the intersection testing module 108 may provide, as inputs to a shader program, the determined value(s) of the intersection attribute(s) for the primary sample of the ray and the determined data indicating a change to the intersection attribute(s) in one or both of the directions parallel to the $P$ and $Q$ axes, and the processing logic 110 may execute the shader program using the provided inputs. In particular, step S208 may involve determining an output value (e.g., a pixel value) representing the intersection of the ray 302 and the primitive 304 for use in rendering an image of a scene which includes the primitive 304. Rendered pixel values may be output from the ray tracing system 100 and used in any suitable manner, e.g., displayed on a display, stored in a memory, or transmitted over a network to another device.

Figure 5 illustrates an example in which the position of a primary sample 502 of the ray 302 and the positions of two sub-samples 504 and 506 of the ray 302 are shown relative to the primitive 304 in the ray coordinate system. The primary sample of the ray 502 corresponds with the intersection point 306 shown in Figures 3 and 4. In the example shown in Figure 5, the spread of the ray is processed as orthographic spread. As described above, for an orthographic spread of the ray, the second and third basis vectors, $P$ and $Q$, of the ray coordinate system are defined to be $P =$

$$\frac{1}{\sigma \sqrt{D_x^2 + D_z^2}}(D_z, 0, -D_x) \qquad Q = \frac{1}{\sigma \sqrt{D_y^2 + D_z^2}}(0, D_z, -D_y)$$

and , where $\sigma$ is the spread value for the ray 302. In this case, the offsets in position of the sub-samples of the ray have a magnitude of 1 in the $PQ$ plane. If the spread value $\sigma$ of the ray is increased then the magnitudes of the $P$ and $Q$ basis vectors will be decreased, such that when the positions of the vertices of the primitive 304 are projected into the ray coordinate system, the magnitudes of the components of the projected vertex positions will be smaller (i.e. the primitive will appear smaller in the $PQ$ plane), such that an offset of magnitude 1 in the $PQ$ plane corresponds to a larger step relative to the size of the primitive. In contrast, if the spread value $\sigma$ of the ray is decreased then the magnitudes of the $P$ and $Q$ basis vectors will be increased, such that when the positions of the vertices of the primitive 304 are projected into the ray coordinate system, the magnitudes of the components of the projected vertex positions will be larger (i.e. the primitive will appear larger in the $PQ$ plane), such that an offset of magnitude 1 in the $PQ$ plane corresponds to a smaller step relative to the size of the primitive.

In some examples (including the example shown in Figure 5), the data determined in step S206 for each of one or both of the $P$ and $Q$ axes indicating a change to the intersection attribute(s) in a direction parallel to that axis comprises a rate of change for each of the intersection attribute(s) in the direction parallel to that axis. In particular, the rate of change of each of the one or more intersection attributes over a plane defined by the planar primitive is determined. In these examples, step S206 aims to determine rates of change of the intersection attributes, rather than necessarily determining values of the intersection attributes at positions of sub-samples of the ray. Since the primitive 304 is planar, and since the sub-sample 504 is at a position (1,0) in the $PQ$ plane, the difference (or "delta") between the value of an intersection attribute for the sub-sample 504 of the ray and the value of the intersection attribute for the primary sample 502 of the ray is equal to the rate of change of that intersection attribute in the direction parallel to the $P$ axis. Similarly, the difference (or "delta") between the value of an intersection attribute for the sub-sample 506 of the ray and the value of the intersection attribute for the primary sample 502 of the ray is equal to the rate of change of that intersection attribute in the direction parallel to the $Q$ axis.

For example, the intersection attribute(s) may comprise two barycentric coordinates, u and v. As described above, a first barycentric coordinate, u, for the primary sample 502 of the ray 302 is given by $u = \frac{A_0}{A_\Sigma} = \frac{b_p c_q - b_q c_p}{A_\Sigma}$ , and a second barycentric coordinate, v, for the primary sample 502 of the ray 302 is given by $v = \frac{A_1}{A_\Sigma} = \frac{c_p a_q - c_q a_p}{A_\Sigma}$ . For a sub-sample of the ray at an offset (p,q) from the primary sample of the ray in the $PQ$ plane of the ray coordinate system, the areal coordinates, $A'_0$, $A'_1$ and $A'_2$ could be given by the 2D cross products described above for the primary sample, but shifted by the offset (p,q) in the $PQ$ plane. Therefore, the first areal coordinate for the sub-sample $A'_0 = (b_p - p)(c_q - q) - (b_q - q)(c_p - p)$, the second areal coordinate for the sub-sample $A'_1 = (c_p - p)(a_q - q) - (c_q - q)(a_p - p)$, and the third areal coordinate for the sub-sample $A'_2 = (a_p - p)(b_q - q) - (a_q - q)(b_p - p)$. As such, the differences in the areal coordinates ($\Delta A_0$, $\Delta A_1$ and $\Delta A_2$) between the sub-sample position (at (p,q) in the $PQ$ plane) and the primary sample position (at (0,0) in the $PQ$ plane) are:

$$\Delta A_0 = A'_0 - A_0 = p(b_q - c_q) + q(c_p - b_p)$$

$$\Delta A_1 = A'_1 - A_1 = p(c_q - a_q) + q(a_p - c_p)$$

$$\Delta A_2 = A'_2 - A_2 = p(a_q - b_q) + q(b_p - a_p)$$

As such, the rates of change of the areal coordinates in the directions parallel to the **P** and **Q** axes are:

$$\frac{\partial A_0}{\partial p} = b_q - c_q$$

$$\frac{\partial A_0}{\partial q} = c_p - b_p$$

$$\frac{\partial A_1}{\partial p} = c_q - a_q$$

$$\frac{\partial A_1}{\partial q} = a_p - c_p$$

$$\frac{\partial A_2}{\partial p} = a_q - b_q$$

$$\frac{\partial A_2}{\partial q} = b_p - a_p$$

As described above, the barycentric coordinates ($u, v, w$) for the primary sample of the ray are related to the areal

$$(u, v, w) = \left( \frac{A_0}{A_\Sigma}, \frac{A_1}{A_\Sigma}, \frac{A_2}{A_\Sigma} \right)$$

coordinates ($A_0$, $A_1$, $A_2$) according to . Similarly, the barycentric coordinates ($u'$, $v'$, $w'$) for the sub-sample of the ray at an offset of (p,q) are related to the areal coordinates ($A'_0$, $A'_1$, $A'_2$) according to

$$(u', v', w') = \left( \frac{A'_0}{A'_\Sigma}, \frac{A'_1}{A'_\Sigma}, \frac{A'_2}{A'_\Sigma} \right)$$

. Since $A_\Sigma$ and $A'_\Sigma$ represent the area of the primitive 304 on the *PQ* plane of the ray coordinate system, which is the same when considering both the primary sample and the sub-sample of the ray, it can be appreciated that $A_\Sigma = A'_\Sigma$. It is noted that since $A_0 + A_1 + A_2 = A_\Sigma = A'_0 + A'_1 + A'_2 = A'_\Sigma$, the sum of the changes (and the rates of change) in the areal coordinates as the position is altered is zero, i.e., $\Delta A_0 + \Delta A_1 +$ $\Delta A_2 = 0$, $\frac{\partial A_0}{\partial p} + \frac{\partial A_1}{\partial p} + \frac{\partial A_2}{\partial p} = 0$ and $\frac{\partial A_0}{\partial q} + \frac{\partial A_1}{\partial q} + \frac{\partial A_2}{\partial q} = 0$. As such, step S206 might only determine the values of the rates of change for two of the areal coordinates (e.g., $A_0$ and $A_1$) in each dimension, with the value of the rate of change for the third areal coordinate (e.g., $A_2$) not being explicitly determined, but being inferable from the rates of change for the other two areal coordinates (e.g., $A_0$ and $A_1$).

Therefore, the differences in the barycentric coordinates ($\Delta u$, $\Delta v$ and $\Delta w$) between the sub-sample position (at (p,q) in the **PQ** plane) and the primary sample position (at (0,0) in the **PQ** plane) are:

$$\Delta u = \frac{\Delta A_0}{A_\Sigma} = \frac{1}{A_\Sigma}\left(p(b_q - c_q) + q(c_p - b_p)\right)$$

$$\Delta v = \frac{\Delta A_1}{A_\Sigma} = \frac{1}{A_\Sigma}\left(p(c_q - a_q) + q(a_p - c_p)\right)$$

$$\Delta w = \frac{\Delta A_2}{A_\Sigma} = \frac{1}{A_\Sigma}\left(p(a_q - b_q) + q(b_p - a_p)\right)$$

As such, the rates of change of the barycentric coordinates in the directions parallel to the **P** and **Q** axes are:

$$\frac{\partial u}{\partial p} = \frac{b_q - c_q}{A_\Sigma}$$

$$\frac{\partial u}{\partial q} = \frac{c_p - b_p}{A_\Sigma}$$

$$\frac{\partial v}{\partial p} = \frac{c_q - a_q}{A_\Sigma}$$

$$\frac{\partial v}{\partial q} = \frac{a_p - c_p}{A_\Sigma}$$

$$\frac{\partial w}{\partial p} = \frac{a_q - b_q}{A_\Sigma}$$

$$\frac{\partial w}{\partial q} = \frac{b_p - a_p}{A_\Sigma}$$

It is noted that since $u + v + w = 1$, the sum of the changes (and the rates of change) in the barycentric coordinates as the position is altered is zero, i.e., $\Delta u + \Delta v + \Delta w = 0$, $\frac{\partial u}{\partial p} + \frac{\partial v}{\partial p} + \frac{\partial w}{\partial p} = 0$ and $\frac{\partial u}{\partial q} + \frac{\partial v}{\partial q} + \frac{\partial w}{\partial q} = 0$. As such, step S206 might only determine the values of the rates of change for two of the barycentric coordinates (e.g., u and v) in each dimension, with the value of the rate of change for the third barycentric coordinate (e.g., w) not being explicitly determined, but being inferable from the rates of change for the other two barycentric coordinates (e.g., u and v). In other words, as an example, step S206 might involve determining values for $\frac{\partial u}{\partial p}, \frac{\partial u}{\partial q}, \frac{\partial v}{\partial p}$ and $\frac{\partial v}{\partial q}$, but not determining values for $\frac{\partial w}{\partial p}$ and $\frac{\partial w}{\partial q}$. It can be seen from the equations given above that the values for the rates of change of the areal coordinates and the barycentric coordinates in directions parallel to the **P** and **Q** axes are simple to determine, e.g. for the areal coordinates they just involve a subtraction of one primitive vertex component from another in the ray coordinate system, and for the barycentric coordinates they just involve a subtraction of one primitive vertex component from another in the ray coordinate system and a division by a value ($A_\Sigma$) which is constant for a particular ray-primitive pair. It is noted that the division by $A_\Sigma$ may be implemented as a multiplication by $\frac{1}{A_\Sigma}$. Multiplication is generally simpler to implement (e.g., in logic having lower latency, power consumption and/or silicon area) than division, and the value of $\frac{1}{A_\Sigma}$ may already have been calculated as part of the barycentric normalisation for the primary sample. In particular, the values for the rates of change of the areal coordinates and the barycentric coordinates in directions parallel to the **P** and **Q** axes are simpler to determine in the ray coordinate system by implementing (e.g., in fixed function circuitry) the subtractions and multiplications (or divisions) in accordance with the equations given above compared to tracing separate sub-rays through the scene.

In examples in which step S206 involves determining the rate of change for each of the one or more barycentric coordinates in one or both of the directions parallel to the **P** and **Q** axes, step S208 may involve using the determined rate of change for each of the one or more barycentric coordinates in one or both of the directions parallel to the **P** and **Q** axes to determine a Level of Detail (LOD) for the primitive. The LOD for the primitive gives a sense of scale of the primitive relative to screen space, which can be useful for a number of reasons. For example, in step S208 the determined Level of Detail for the primitive may be used to select a mipmap level of a texture, and the texture can then be applied, at the selected mipmap level, to the primitive. Furthermore, the determined LOD for the primitive may be used to select a model LOD in a subsequent frame, or for generating a dynamic geometry LOD (e.g., for tessellation), or for calculating a curvature estimate for advanced lighting techniques. In some situations, the rates of change of the barycentric coordinates may be significantly different in the direction parallel to the **P** axis compared to in the direction parallel to the **Q** axis. This difference may be used to select different LODs in different directions for the primitive, e.g., for applying anisotropic texturing/effects to the primitive.

As another example, the intersection attribute(s) may comprise an intersection distance, $t$. The intersection distance, t, for the primary sample of the ray can be determined as $t = \frac{1}{A_\Sigma D_z}(A_0 a_z + A_1 b_z + A_2 c_z - O_z) = \frac{1}{D_z}(u a_z + v b_z + w c_z - O_z)$ . The difference in the intersection distance ($\Delta t$) between the sub-sample position (at (p,q) in the **PQ** plane) and the primary sample position (at (0,0) in the **PQ** plane) is $\Delta t = \frac{1}{D_z}(\Delta u a_z + \Delta v b_z + \Delta w c_z)$.

As such, the rates of change of the intersection distance in the directions parallel to the **P** and **Q** axes are given by:

$$\frac{\partial t}{\partial p} = \frac{\frac{\partial u}{\partial p} a_z + \frac{\partial v}{\partial p} b_z + \frac{\partial w}{\partial p} c_z}{D_z}$$

$$\frac{\partial t}{\partial q} = \frac{\frac{\partial u}{\partial q} a_z + \frac{\partial v}{\partial q} b_z + \frac{\partial w}{\partial q} c_z}{D_z}$$

As described above, $D_z$ is the major component of the ray direction vector in the space-coordinate system, i.e., $D_z$ is the component having the largest magnitude of the components of a ray direction vector for the ray in the space-coordinate system in which the primitive is defined. $a_z$ is the coordinate for a first vertex of the primitive in the same dimension of the space-coordinate system as $D_z$, $b_z$ is a coordinate for a second vertex of the primitive in the same dimension of the space-coordinate system as $D_z$, and $c_z$ is a coordinate for a third vertex of the primitive in the same dimension of the space-coordinate system as $D_z$. It is noted that a division by $D_z$ as implied in the equations for $\frac{\partial t}{\partial p}$ and $\frac{\partial t}{\partial q}$ given above may be implemented as a multiplication by $\frac{1}{D_z}$, and that the value of $\frac{1}{D_z}$ may have already been generated as part of the original distance calculation for the primary sample.

The values of $\frac{\partial u}{\partial p}, \frac{\partial v}{\partial p}, \frac{\partial w}{\partial p}, \frac{\partial u}{\partial q}, \frac{\partial v}{\partial q}$ and $\frac{\partial w}{\partial q}$ are simple to determine using the subtractions and multiplication operations described above, and then it is simple to perform the addition and multiplication operations to determine $\frac{\partial t}{\partial p}$ and $\frac{\partial t}{\partial q}$ in accordance with the equations given in the preceding paragraph. In particular, the values for the rates of change of the intersection distance in directions parallel to the **P** and **Q** axes are simpler to determine in the ray coordinate system by implementing (e.g., in fixed function circuitry) the additions, subtractions and multiplications in accordance with the equations given above compared to tracing separate sub-rays through the scene. The values of the rates of change of the intersection distance in directions parallel to the **P** and **Q** axes (ap and $\frac{\partial t}{\partial q}$ ) can be used in step S208, e.g., by a shader program executed by the processing logic 110, to determine how to process the intersection between the ray 302 and the primitive 304. For example, the values of $\frac{\partial t}{\partial p}$ and $\frac{\partial t}{\partial q}$ can be used to indicate the angle of the planar surface of the primitive 304 relative to the ray direction. In particular, values of $\frac{\partial t}{\partial p}$ and $\left| \frac{\partial t}{\partial q} \right.$ with low magnitudes indicate that the normal to the surface of the primitive 304 is closely aligned to the ray direction (i.e., the primitive is viewed substantially face-on from the perspective of the ray); whereas values of $\frac{\partial t}{\partial p}$ and $\frac{\partial t}{\partial q}$ with high magnitudes indicate that the that the normal to the surface of the primitive 304 is not closely aligned to the ray direction (i.e., the primitive is viewed at an oblique angle from the perspective of the ray).

It is noted that operations such as addition, subtraction, and multiplication operations can be implemented efficiently in hardware, e.g., in fixed function circuitry. In particular, the logic for determining the rates of change of the intersection attributes in directions parallel to the **P** and **Q** axes can be implemented with reduced latency, reduced power consumption and/or reduced silicon area compared to conventional ray tracing techniques which may involve tracing separate sub-rays through the scene.

As described above, in some examples the data that is determined in step S206 comprises rates of change of the intersection attribute(s) in the directions parallel to the **P** and **Q** axes. As another example, the data that is determined in step S206 may comprise values of the intersection attribute(s) for sub-samples of the ray which are offset from the primary sample of the ray in the directions parallel to the **P** and **Q** axes. In these other examples, for each of one or both of the **P** and **Q** axes of the ray coordinate system, the data (that is determined in step S206) indicating a change to the one or more intersection attributes in a direction parallel to that axis comprises a value of each of the one or more intersection attributes for a sub-sample of the ray relating to the intersection between the ray and the primitive, the sub-sample of the ray being offset from the primary sample of the ray in the direction parallel to that axis. Figure 6 illustrates an example in which the position of a primary sample 602 of the ray 302 and the positions of four sub-samples 604, 606, 608 and 610 of the ray 302 are shown relative to the primitive 304 in the ray coordinate system. The primary sample of the ray 602 corresponds with the intersection point 306 shown in Figures 3 and 4. The sub-sample 604 is at an offset of (+1,0) from the primary sample 602 in the **PQ** plane of the ray coordinate system; the sub-sample 606 is at an offset of (0,+1) from the primary sample 602 in the **PQ** plane of the ray coordinate system; the sub-sample 608 is at an offset of (-1,0) from the primary sample 602 in the **PQ** plane of the ray coordinate system; and the sub-sample 610 is at an offset of (0,-1) from the primary sample 602 in the **PQ** plane of the ray coordinate system. Therefore, the primary sample and the four sub-samples are arranged in an axis-aligned cross pattern (rotated quincunx) centred on the position of the primary sample.

The value of each of the intersection attribute(s) for a sub-sample of the ray is determined starting from the corresponding intersection attribute determined for the primary sample of the ray, e.g., by applying one or more logical operations (e.g. one or more addition, subtraction and/or multiplication operations) to the value of the corresponding intersection attribute determined for the primary sample of the ray. For example, the value of each of the intersection attribute(s) for a sub-sample of the ray may be determined starting from the corresponding intersection attribute determined for the primary sample of the ray by applying one or more increments or decrements to the value of the corresponding intersection attribute determined for the primary sample of the ray. In particular, the value of each of the intersection attribute(s) for a sub-sample of the ray is determined as an integer linear combination of differential values. This is simpler (and therefore more efficient to implement, e.g., in hardware) than calculating value of the intersection attributes for the sub-samples by treating the sub-samples as separate rays which are traced through the scene. More specifically, the use of the integer linear combination provides an improvement on the method itself: the ray-space axes are rescaled by the spread value, $\sigma$, which only costs a small number of additional operations (e.g., four) per ray, rather than placing the samples at $(\pm\sigma, 0)$ and $(0, \pm\sigma)$, which would require an extra multiply per sample per ray versus primitive intersection test, totalling a large number of additional operations.

For example, the areal coordinates $(A'_0, A'_1, A'_2)$ for a sub-sample of the ray can be determined by adding and subtracting values to and from the corresponding areal coordinates $(A_0, A_1, A_2)$ for the primary sample of the ray according to:

$$A'_0 = A_0 + p'\left(b_q - c_q\right) + q'\left(c_p - b_p\right)$$

$$A'_1 = A_1 + p'\left(c_q - a_q\right) + q'\left(a_p - c_p\right)$$

$$A'_2 = A_2 + p'\left(a_q - b_q\right) + q'\left(b_p - a_p\right)$$

where $p'$ and $q'$ represent the offset of the sub-sample relative to the primary sample on the **P** and **Q** axes.

For the sub-sample 604, $p' = 1$ and $q' = 0$, so for sub-sample 604 $A'_0 = A_0 + b_q - c_q$, $A'_1 = A_1 + c_q - a_q$ and $A'_2 = A_2 + a_q - b_q$.

For the sub-sample 606, $p' = 0$ and $q' = 1$, so for sub-sample 606 $A'_0 = A_0 + c_p - b_p$, $A'_1 = A_1 + a_p - c_p$ and $A'_2 = A_2 + b_p - a_p$.

For the sub-sample 608, $p' = -1$ and $q' = 0$, so for sub-sample 608 $A'_0 = A_o - b_q + c_q$, $A'_1 = A_1 - c_q + a_q$ and $A'_2 = A_2 - a_q + b_q$.

For the sub-sample 610, $p' = 0$ and $q' = -1$, so for sub-sample 610 $A'_0 = A_o - c_p + b_p$, $A'_1 = A_1 - a_p + c_p$ and $A'_2 = A_2 - b_p + a_p$.

It can therefore be seen that the areal coordinates for the four sub-samples 604, 606, 608 and 610 can be determined from the corresponding areal coordinates for the primary sample 602 by adding the value of one primitive vertex coordinate in the ray coordinate system and subtracting the value of another one primitive vertex coordinate in the ray coordinate system. Implementing one addition and one subtraction operation is incredibly simple to implement, e.g. in hardware such as fixed function circuitry, so the latency, power consumption and/or silicon area used to determine the areal coordinates for the sub-samples is tiny.

As another example, the barycentric coordinates $(u', v', w')$ for a sub-sample of the ray can be determined starting from the corresponding barycentric coordinates $(u, v, w)$ for the primary sample of the ray according to:

$$u' = u + p'\frac{b_q - c_q}{A_\Sigma} + q'\frac{c_p - b_p}{A_\Sigma}$$

$$v' = v + p'\frac{c_q - a_q}{A_\Sigma} + q'\frac{a_p - c_p}{A_\Sigma}$$

$$w' = w + p'\frac{a_q - b_q}{A_\Sigma} + q'\frac{b_p - a_p}{A_\Sigma}$$

where $p'$ and $q'$ represent the offset of the sub-sample relative to the primary sample on the $\boldsymbol{P}$ and $\boldsymbol{Q}$ axes.

For the sub-sample 604, $p' = 1$ and $q' = 0$, so for sub-sample 604 $u' = u + \frac{b_q - c_q}{A_\Sigma}$, $v' = v + \frac{c_q - a_q}{A_\Sigma}$ and $w' = w + \frac{a_q - b_q}{A_\Sigma}$.

For the sub-sample 606, $p' = 0$ and $q' = 1$, so for sub-sample 606 $u' = u + \frac{c_p - b_p}{A_\Sigma}$, $v' = v + \frac{a_p - c_p}{A_\Sigma}$ and $w' = w + \frac{b_p - a_p}{A_\Sigma}$.

For the sub-sample 608, $p' = -1$ and $q' = 0$, so for sub-sample 608 $u' = u - \frac{b_q - c_q}{A_\Sigma}$, $v' = v - \frac{c_q - a_q}{A_\Sigma}$ and $w' = w - \frac{a_q - b_q}{A_\Sigma}$.

For the sub-sample 610, $p' = 0$ and $q' = -1$, so for sub-sample 610 $u' = u - \frac{c_p - b_p}{A_\Sigma}$, $v' = v - \frac{a_p - c_p}{A_\Sigma}$ and $w' = w - \frac{b_p - a_p}{A_\Sigma}$.

It can therefore be seen that the barycentric coordinates for the four sub-samples 604, 606, 608 and 610 can be determined from the corresponding barycentric coordinates for the primary sample 602 by adding a term that is determined by: (i) subtracting the value of one primitive vertex coordinate in the ray coordinate system from the value of another one primitive vertex coordinate in the ray coordinate system, and (ii) multiplying the result of the subtraction by $\frac{1}{A_\Sigma}$. Implementing one addition, one subtraction and one multiplication operation is simple to implement, e.g., in hardware such as fixed function circuitry, so the latency, power consumption and/or silicon area used to determine the areal coordinates for the sub-samples is small.

As another example, the intersection distance $(t')$ for a sub-sample of the ray can be determined starting from the intersection distance ($t$) for the primary sample of the ray according to:

$$t' = t + \frac{1}{D_z}(\Delta u a_z + \Delta v b_z + \Delta w c_z)$$

$$t' = t + \frac{1}{A_\Sigma D_z}\left(\left(p'(b_q - c_q) + q'(c_p - b_p)\right)a_z + \left(p'(c_q - a_q) + q'(a_p - c_p)\right)b_z\right.$$
$$\left. + \left(p'(a_q - b_q) + q'(b_p - a_p)\right)c_z\right)$$

where $p'$ and $q'$ represent the offset of the sub-sample relative to the primary sample on the **P** and **Q** axes.

For the sub-sample 604, $p' = 1$ and $q' = 0$, so for sub-sample 604 $t' = t + \frac{1}{A_\Sigma D_z}\left((b_q - c_q)a_z + (c_q - a_q)b_z + (a_q - b_q)c_z\right)$.

For the sub-sample 606, $p' = 0$ and $q' = 1$, so for sub-sample 606 $t' = t + \frac{1}{A_\Sigma D_z}\left((c_p - b_p)a_z + (a_p - c_p)b_z + (b_p - a_p)c_z\right)$.

For the sub-sample 608, $p' = -1$ and $q' = 0$, so for sub-sample 608 $t' = t + \frac{1}{A_\Sigma D_z}\left((c_q - b_q)a_z + (a_q - c_q)b_z + (b_q - a_q)c_z\right)$.

For the sub-sample 610, $p' = 0$ and $q' = 1$, so for sub-sample 610 $t' = t + \frac{1}{A_\Sigma D_z}\left((b_p - c_p)a_z + (c_p - a_p)b_z + (a_p - b_p)c_z\right)$.

It can therefore be seen that the intersection distances for the four sub-samples 604, 606, 608 and 610 can be determined from the corresponding intersection distance for the primary sample 602 by performing addition, subtraction and multiplication operations, which are much simpler to implement than tracing each of the sub-rays separately through the scene. Again, it is noted that the divisions can be implemented as multiplications by the reciprocals of the values. The value of $\frac{1}{A_\Sigma}$ has already been calculated and the division by $D_z$ is already accomplished as a multiply in the barycentric calculation. It is also noted that the values of $\Delta u$, $\Delta v$ and $\Delta w$ would already be generated as intermediate values in the barycentric calculations above, and therefore they can be fed in as inputs to this distance calculation to reduce the additional number of subtractions/multiplies that are performed in this distance calculation.

Step S208 of processing the intersection between the ray 302 and the primitive 304, may comprise using the intersection attribute(s) determined for each of the sub-samples of the ray to determine whether that sub-sample of the ray hits the primitive. As described above, the determination of whether sample of the ray (either the primary sample or a sub-sample of the ray) hits the primitive may be based on the signs of the areal coordinates determined for the sample. In particular, if all of the areal coordinates determined for the intersection between the sample of the ray 302 and the primitive 304 have the same sign then it is determined that that sample of the ray intersects the primitive, whereas if it is not the case that all of the areal coordinates determined for the intersection between the sample of the ray 302 and the primitive 304 have the same sign then it is determined that that sample of the ray does not intersect the primitive.

Figure 7 illustrates an example in which the position of a primary sample 702 of the ray 302 and the positions of eight sub-samples 704, 706, 708, 710, 712, 714, 716 and 718 of the ray 302 are shown relative to the primitive 304 in the ray coordinate system. The primary sample of the ray 702 corresponds with the intersection point 306 shown in Figures 3 and 4. The sub-sample 704 is at an offset of (+1,0) from the primary sample 702 in the **PQ** plane of the ray coordinate system; the sub-sample 706 is at an offset of (0,+1) from the primary sample 702 in the **PQ** plane of the ray coordinate system; the sub-sample 708 is at an offset of (-1,0) from the primary sample 702 in the **PQ** plane of the ray coordinate system; the sub-sample 710 is at an offset of (0,-1) from the primary sample 702 in the **PQ** plane of the ray coordinate system; the sub-sample 712 is at an offset of (+1,+1) from the primary sample 702 in the **PQ** plane of the ray coordinate system; the sub-sample 714 is at an offset of (-1,+1) from the primary sample 702 in the **PQ** plane of the ray coordinate system; the sub-sample 716 is at an offset of (-1,-1) from the primary sample 702 in the **PQ** plane of the ray coordinate system; and the sub-sample 718 is at an offset of (+1,-1) from the primary sample 702 in the **PQ** plane of the ray coordinate system. Therefore, the primary sample and the eight sub-samples are arranged into a 3x3 axis-aligned square pattern centred on the position of the primary sample.

In this case the values of the intersection attributes for the samples can be determined starting from the primary sample, e.g., in one or more sequences. The "samples" here refer to the primary sample and to the sub-samples of the ray. The one or more sequences are such that the value(s) of the intersection attribute(s) for a sub-sample are determined based on, i.e., relative to, the value(s) of the corresponding intersection attribute(s) for a sample which have already been determined. Furthermore, the one or more sequences may be such that a current sub-sample for which the value(s) of the intersection attribute(s) are being determined is located either horizontally adjacent or vertically adjacent in the 3x3 square pattern of samples to a previous sample for which the value(s) of the intersection attribute(s) have been determined and from which the value(s) of the intersection attribute(s) for the current sub-sample are determined. In this way, the same increments/decrements as described above in relation to Figure 6 can be used to determine the intersection attributes for all of the sub-samples shown in Figure 7. For example, the one or more sequences of samples for which the intersection attributes are determined may comprise a first sequence and a second sequence, where the first sequence goes from the primary sample 702, horizontally to the sub-sample 704, vertically to the sub-sample 712, horizontally to the sub-sample 706 and then horizontally to the sub-sample 714; and where the second sequence goes from the primary sample 702, horizontally to the sub-sample 708, vertically to the sub-sample 716, horizontally to the sub-sample 710 and then horizontally to the sub-sample 718. As another example, the one or more sequences of samples for which the intersection attributes are determined may comprise four sequences, where a first sequence goes from the primary sample 702 horizontally to the sub-sample 704 and then vertically to the sub-sample 712; where a second sequence goes from the primary sample 702 vertically to the sub-sample 706 and then horizontally to the sub-sample 714; where a third sequence goes from the primary sample 702 horizontally to the sub-sample 708 and then vertically to the sub-sample 716; and where a fourth sequence goes from the primary sample 702 vertically to the sub-sample 710 and horizontally to the sub-sample 718. As another example, the one or more sequences of samples for which the intersection attributes are determined may comprise a single sequence, for example where the single sequence goes from the primary sample 702, horizontally to the sub-sample 704, vertically to the sub-sample 712, horizontally to the sub-sample 706, horizontally to the sub-sample 714, vertically to the sub-sample 708, vertically to the sub-sample 716, horizontally to the sub-sample 710 and then horizontally to the sub-sample 718. There are many other sequences that could be implemented in different examples. Where there are multiple sequences, the processing for the different sequences may be performed in parallel or in series with each other. Figure 7 shows an example pattern of sub-samples in a 3x3 axis-aligned grid, other patterns with different numbers of samples may be used, e.g., a 5x5 axis-aligned grid.

The value of an intersection attribute, a', at a sub-sample position which is offset by a displacement (p,q) in the **PQ** plane of the ray coordinate system from the position of a sample for which a value of the intersection attribute, $a$, has previously been determined may be calculated as $a' = a + p\frac{\partial a}{\partial p} + q\frac{\partial a}{\partial q}$. In the examples given in the preceding paragraph, the processing is performed by stepping away from the primary sample position to calculate the values of the intersection attributes at the sub-sample positions, where each step is either strictly horizontal or strictly vertical in the ray coordinate space, so that the calculation of the intersection attributes (e.g. the areal coordinates, barycentric coordinates and/or intersection distances) at the different sub-sample positions can be performed in a simple manner based on previously determined intersection attributes for horizontally or vertically adjacent samples as described above in relation to Figure 6. For a strictly horizontal step, the q coordinate of the offset of sub-sample relative to the previous sub-sample is zero, such that $a' = a + p\frac{\partial a}{\partial p}$. Furthermore, for a strictly horizontal step of magnitude 1 in the **PQ** plane (i.e., the p coordinate of the offset of sub-sample relative to the previous sub-sample is one), the value of an intersection attribute, a', at a sub-sample position is given by $a' = a \pm \frac{\partial a}{\partial p}$. Similarly, for a strictly vertical step, the p coordinate of the offset of sub-sample relative to the previous sub-sample is zero, such that $a' = a + q\frac{\partial a}{\partial q}$. Furthermore, for a strictly vertical step of magnitude 1 in the **PQ** plane (i.e., the q coordinate of the offset of sub-sample relative to the previous sub-sample is one), the value of an intersection attribute, a', at a sub-sample position is given by $a' = a \pm \frac{\partial a}{\partial q}$. In other examples, rather than stepping strictly horizontally or vertically in the **PQ** plane of the ray coordinate system, a step (or offset) could be made to any arbitrary position (p,q) wherein the value of an intersection attribute, a', at a sub-sample position is given by $a' = a + p\frac{\partial a}{\partial p} + q\frac{\partial a}{\partial q}$. It is noted that the values of $\frac{\partial a}{\partial p}$ and $\frac{\partial a}{\partial q}$ are constant for a primitive (as it is a planar polygon), so they just need to be calculated once per primitive (e.g., where $a$ represents any intersection attribute, e.g., an areal coordinate, a barycentric coordinate or an intersection distance). Once the values of $f\frac{\partial a}{\partial p}$ and $\frac{\partial a}{\partial q}$ have been determined for the primitive, stepping to an arbitrary position (p,q) would involve performing two multiplies and two additions per intersection attribute per sub-sample; whereas stepping strictly horizontally or strictly vertically with a step size of 1 in the **PQ** plane would involve performing one addition per intersection attribute per sub-sample. However, this alternative method affords a greater degree of parallelism, which would afford a reduction in latency at the cost of additional area/power (due to more operations being performed concurrently and the larger number of operations overall).

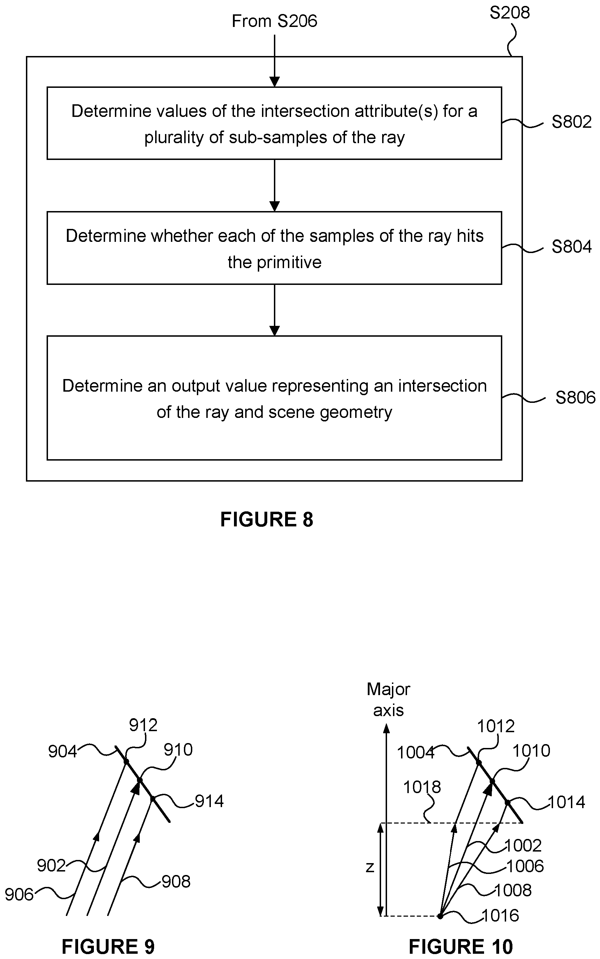

Figure 8 is a flow chart showing an example of steps that can be performed as part of step S208. Performing step S208 as shown in Figure 8 allows a fractional coverage indication to be determined for the intersection between the ray 302 and the primitive 304. As explained above, the ray may be considered to have a finite width, wherein a fractional coverage indication can be used to indicate a proportion of the ray that intersects a primitive. A fractional coverage indication may have a value between 0 and 1, where a coverage indication of zero may indicate that the ray completely misses the primitive and a coverage indication of one may indicate that the whole ray hits the primitive. Being able to determine a fractional coverage may be useful for processes such as anti-aliasing.

In step S802 the ray tracing unit 102 (e.g., the intersection testing module 108) determines values of the intersection attribute(s) for a plurality of sub-samples of the ray (e.g., for four sub-samples of the ray in the example shown in Figure 6 and for eight sub-samples of the ray in the example shown in Figure 7) at different offsets from the primary sample of the ray.

In step S804 the ray tracing unit 102 (e.g., the intersection testing module 108 or the processing logic 110) determines whether each of the samples of the ray hits the primitive based on the determined values of the one or more intersection attributes for that sample of the ray. The determination of whether a sample of the ray hits the primitive may be based on a comparison of an intersection distance t with minimum and maximum valid distances for the ray ($t_{min}$ and $t_{max}$), which may be done separately to the testing unit 108 and only if a hit based on barycentrics/winding has first been established. The "samples" of the ray include the primary sample of the ray and the sub-samples of the ray. For example, as described above, the areal coordinates or the barycentric coordinates for a sample of the ray can be used to determine whether the sample of the ray hits the primitive. For example, if all three of the areal coordinates ($A_0$, $A_1$ and $A_2$) for a sample of the ray have the same sign, or if all three of the barycentric coordinates ($u$, $v$ and $w$) for a sample of the ray have the same sign, then this indicates that the sample of the ray hits the primitive (if the intersection distance is between $t_{min}$ and $t_{max}$). Since $A_0 + A_1 + A_2 = A_\Sigma$ and $u + v + w = 1$, the determination of whether a sample of the ray hits the primitive could be made using just two or the areal coordinates (e.g. $A_0$ and $A_1$) and the value of $A_\Sigma$, or using just two of the barycentric coordinates (e.g. $u$ and $v$), e.g. by determining whether all three of $A_0$, $A_1$ and ($A_\Sigma - A_0 - A_1$) have the same sign or by determining whether all three of u, $v$ and (1 - $u$ - $v$) have the same positive sign (equivalently, are greater than zero, where an exactly zero result may or may not result in an intersection, depending on the outcome of any tie-breaking rule employed for watertightness). To give some other examples, the determination of whether a sample of the ray hits the primitive could be made by determining whether: (i) $A_0 + A_1 < A_\Sigma$ and $A_\Sigma > 0$, (ii) $A_0 + A_1 > A_\Sigma$ and $A_\Sigma < 0$, or (iii) $u + v < 1$. For each sample of the ray, during intersection testing, an identifier (e.g., index) of the closest intersected primitive (or some null value if the sample misses all of the geometry in the scene) is stored, as well as the distance value associated with this intersection. If a sample of the ray is found to intersect multiple primitives, then the intersection with the smallest intersection distance, i.e., the "closest", may be selected as the hit for the sample of the ray (by comparison of the current intersection distance with the previously stored intersection distance). For two intersections with equal distance some other tie-break logic may be used to choose between the intersections. It is noted that different samples of the ray may intersect different geometry (i.e., different primitives) in the scene. As intersection data for each sample of the ray may need to be stored, greater storage allowances may be required for each ray.

To give two examples, the determination of the intersection distance t for a sub-sample of a ray may be implemented using a relatively expensive but relatively accurate technique or using a relatively cheap but relatively inaccurate technique. The relatively expensive but relatively accurate technique fully calculates the t value for each sub-sample associated with a ray, using the distance delta values outlined above. This involves many further additions and multiplies over just calculating the areal or barycentric coordinates. In contrast, the relatively cheap but relatively inaccurate technique only calculates the t value for the primary sample of a ray and shares this t value with all of the sub-samples of the ray (although each sub-sample still uses its own correct areal or barycentric coordinates). This reduces the number of further additions and multiplies that are performed, but it only provides an approximate solution. In particular, the relatively cheap but relatively inaccurate technique will tend to work well for primitives that are near camera facing, and with reasonable spacing between layers of geometry, but it may not work so well for primitives that are at an angle to the camera or for layers of geometry that are close together (e.g., decals). Any errors that are introduced into the determination of the intersection distances for the sub-samples of a ray are restricted to the sub-samples only, and not the primary sample, such that any resulting artefacts will be less noticeable.

In step S806 the ray tracing unit 102 (e.g., the processing logic 110) uses the determinations of whether each of the samples of the ray 302 hits the primitive 304 to determine an output value representing an intersection of the ray 302 with scene geometry, wherein the intersection of the ray 302 with the scene geometry comprises the intersection between the ray 302 and the primitive 304.

The determination of the output value representing an intersection of the ray 302 with scene geometry in step S806 may comprise performing a weighted sum of contributions to the output value from intersections of samples of the ray with one or more primitives. For each sample of the ray, a colour value may be determined representing the intersection of that sample of the ray with the primitive that it intersects (as indicated by the respective identifier of the closest intersection primitive determined in step S804 for that sample of the ray). If the sample of the ray misses all of the geometry in the scene (as indicated by a null value being stored for that sample of the ray in step S804) then a default or 'background' colour value may be determined for that sample of the ray. The colour values determined for the samples of the ray can then be blended together in a weighted sum, using predetermined weights associated with the positions of the samples. The weights may be uniform (i.e., the same for all of the samples of the ray) or they may be different for different samples of the ray. For example, the weight for the colour value determined for a sample in the weighted sum may depend upon the position of the sample relative to the primary sample of the ray, e.g., with samples that are closer to the primary sample of the ray having larger weights. The result of the weighted sum may be a final colour value (e.g., an anti-aliased colour value) representing the intersection of the ray with the scene geometry.

The determination of the colour values can be performed by running a shader program, e.g., a closest-hit shader. There are options for the shader to implement super-sample anti-aliasing (SSAA) or multi-sample anti-aliasing (MSAA), i.e., either (i) one shader can be executed per sub-sample, or (ii) one shader can be executed per intersected primitive. In case (i), i.e., for SSAA, a barycentric coordinate corresponding to each sub-sample is used as input to its respective invoked shader. In case (ii), i.e., for MSAA, a barycentric coordinate corresponding to each sub-sample is used to determine intersection, but only the barycentric coordinate corresponding to the primary sample of a ray is used as input, and as input to shaders invoked once only for each intersected primitive (intersected by one or more samples). The delta values are used to calculate fractional weights for coverage only.

As an example, step S806 may comprise determining, for each of the samples of the ray 302 that are determined to hit the primitive 304, a contribution from the primitive 304 to the output value. It is noted that any samples of the ray 302 that do not hit the primitive 304 do not provide a contribution from the primitive 304 (but they may provide a contribution from a different primitive that the sample of the ray is determined to hit). As described above, the determined contributions for the samples of the ray are used to determine the output value representing the intersection of the ray with the scene geometry. As described above, for each of the samples of the ray, the contribution may be weighted based on a position of the sample relative to the primary sample.

In the example shown in Figure 6 three of the five samples of the ray 302 intersect (i.e., hit) the primitive 304 and two of the five samples of the ray 302 do not intersect (i.e., they miss) the primitive 304. In particular, the primary sample 602, the sub-sample 604 and the sub-sample 606 hit the primitive 304, whereas the sub-sample 608 and the sub-sample 610 miss the primitive. In this example, the weights used to combine the colour values from the different samples may be uniform for the different samples, e.g., since there are five samples, each weight may be 0.2. As another example, the weights used to combine the colour values from the different samples depend on the positions of the samples, and may be represented with a kernel such as $\begin{bmatrix} & 1/6 & \\ 1/6 & 1/3 & 1/6 \\ & 1/6 & \end{bmatrix}$. In this example, the colour value determined from the primary sample is weighted by $\frac{1}{3}$ whereas the colour values determined from each of the sub-samples is weighted by $\frac{1}{6}$. It is noted that this example kernel is normalised (i.e., the components of the kernel sum to 1), and it is horizontally and vertically symmetric.

In the example shown in Figure 7 three of the nine samples of the ray 302 intersect (i.e., hit) the primitive 304 and six of the nine samples of the ray 302 do not intersect (i.e., they miss) the primitive 304. In particular, the primary sample 702, the sub-sample 704 and the sub-sample 706 hit the primitive 304, whereas the sub-samples 708, 710, 712, 714, 716 and 718 miss the primitive 304. In this example, the weights used to combine the colour values from the different samples may be uniform for the different samples, e.g., since there are nine samples, each weight may be $\frac{1}{9}$. As another example, the weights used to combine the colour values from the different samples depend on the positions of the samples, and may be represented with a (normalised) kernel such as $\begin{bmatrix} 1/16 & 1/8 & 1/16 \\ 1/8 & 1/4 & 1/8 \\ 1/16 & 1/8 & 1/16 \end{bmatrix}$. In this example, the colour value determined from the primary sample is weighted by $\frac{1}{4}$, the colour values determined from the sub-samples 704, 706, 708 and 710 which are horizontally or vertically adjacent to the primary sample in the **PQ** plane are weighted by $\frac{1}{8}$, and the colour values determined from the sub-samples 712, 714, 716 and 718 which are diagonally adjacent to the primary sample in the **PQ** plane are weighted by $\frac{1}{16}$. It is noted that this example kernel is normalised (i.e., the components of the kernel sum to 1), and it is horizontally and vertically symmetric. It is also a separable kernel, i.e., it is the matrix product of column and row vectors given by [¼, ½, ¼]. Furthermore, the values of the weights shown in this example kernel are very simple to implement, e.g., in binary logic, because all of the weights represent divisions by powers of two. Divisions by powers of two can be implemented in a fixed-point format by shifting bits to the right. Bit shifts are very simple to implement in hardware, e.g., in fixed function circuitry. For example, a division by $2^n$ can be implemented by shifting bits of an input value n places to the right. For a floating-point format, division by a power of two can be achieved by decrementing the exponent n times (i.e., subtracting n).

The technique of implementing fractional coverage for ray intersections is most useful for non-occluding rays rather than for occluding rays for which the sole intention of the intersection testing tends to be on determining whether a hit occurs or not. However, for occluding rays, the ratio of hits to misses for the samples of a ray could be useful, e.g., for implementing penumbra effects for a shadow ray.

As described above, a spread value for the ray 302 is used to determine the offset of the sub-sample of the ray from the primary sample of the ray. In particular, the spread value is used to project the primitive 304 into the ray coordinate system. As described above, the second and third basis vectors of the ray coordinate system, **P** and **Q,** are defined to be **P** = $B(D_z, 0, -D_x)$ and **Q** = $C(0, D_z, -D_y)$, where B and C are non-zero scalar values.

The spread value may represent an orthographic spread of the ray. In this example, the scalar values B and C may be defined as

$$B = \frac{1}{\sigma\sqrt{D_x^2 + D_z^2}} \quad \text{and} \quad C = \frac{1}{\sigma\sqrt{D_y^2 + D_z^2}}.$$

In other words, the basis vectors **P** and **Q** are defined to be

$$P = \frac{1}{\sigma\sqrt{D_x^2 + D_z^2}}(D_z, 0, -D_x) \quad \text{and} \quad Q = \frac{1}{\sigma\sqrt{D_y^2 + D_z^2}}(0, D_z, -D_y),$$

in an example implementing orthographic spread. The four not-necessarily-zero components of **P** and **Q,** can be computed once per ray (e.g., offline or at their point of generation in a shader) and stored as per-ray data. Then these stored values can be reused for every ray versus primitive test for the ray, rather than being regenerated each time on-the-fly, at increased expense. In examples implementing orthographic spread, the offsets of sub-sample positions relative to the primary sample position are at steps of magnitude 1 in the **PQ** plane of the ray coordinate system, as shown in Figures 5, 6 and 7. In these examples, the positions of sub-samples of the ray are at coordinates (p,q) in the **PQ** plane of the ray coordinate system, where p and q are -1, 0 or +1 in ray coordinate system. Figure 9 illustrates a primitive 904 and a ray having an orthographic spread in a space-coordinate system in which the primitive 904 is defined. A primary sample of the ray is denoted 902 and two sub-samples of the ray are denoted 906 and 908 in Figure 9. It can be seen that the primary sample 902 and the two sub-samples 906 and 908 are parallel, thereby representing an orthographic spread. The primary sample of the ray 902 intersects the primitive 904 at point 910; the sub-sample of the ray 906 intersects the primitive 904 at point 912; and the sub-sample of the ray 908 intersects the primitive 904 at point 914. In this example, the primary sample and the sub-samples of the ray are parallel, and the primitive 904 is planar, so the offsets of the sub-samples from the primary sample of the ray have the same magnitude in each direction. The size of this offset is determined by the σ parameter, i.e., a unit step (i.e., of magnitude 1) in ray space corresponds to a step of magnitude σ in its original space-coordinate system.

The spread value may represent a pseudo-perspective spread of the ray. In this example, the scalar values B and C may be defined as

$$B = \frac{|D_z|}{\sigma\sqrt{D_x^2 + D_z^2}} \quad \text{and} \quad C = \frac{|D_z|}{\sigma\sqrt{D_y^2 + D_z^2}}.$$

In other words, the basis vectors **P** and **Q** are defined to be

$$P = \frac{|D_z|}{\sigma\sqrt{D_x^2 + D_z^2}}(D_z, 0, -D_x) \quad \text{and} \quad Q = \frac{|D_z|}{\sigma\sqrt{D_y^2 + D_z^2}}(0, D_z, -D_y)$$

in an example implementing a pseudo-perspective spread. As mentioned above, the four not-necessarily-zero components of **P** and **Q,** can be computed once per ray (e.g., offline or at their point of generation in a shader) and stored as per-ray data. Then these stored values can be reused for every ray versus primitive test for the ray, rather than being regenerated each time on-the-fly, at increased expense. It is noted that the $|D_z|$ in the numerators of B and C normalises the step by z (given as the minimum absolute distance from the ray origin to the polygonal primitive along the major axis **Z**). In other words, the spread value σ is relative to the number of ray lengths travelled rather than to a Euclidean distance. I.e., when the ray has travelled a distance equal to its own length the sub-samples will have spread out by an amount $\sigma$ along each minor axis.

In examples implementing pseudo-perspective spread, the offsets of sub-sample positions relative to the primary sample position are at steps of magnitude z in the **PQ** plane of the ray coordinate system (ratherthan at steps of magnitude 1 as shown in Figures 5, 6 and 7). For example, the positions of sub-samples of the ray may be at coordinates (p,q) in the **PQ** plane of the ray coordinate system, where p and q are -z, 0 or +z in ray coordinate system. Figure 10 illustrates a primitive 1004 and a ray having a pseudo-perspective spread in a space-coordinate system in which the primitive 1004 is defined. A primary sample of the ray is denoted 1002 and two sub-samples of the ray are denoted 1006 and 1008 in Figure 10. It can be seen that the primary sample 1002 and the two sub-samples 1006 and 1008 originate and spread out from a point 1016, thereby representing perspective spread. The point 1016 may be the origin to the ray. Figure 10 indicates the major axis of the space-coordinate system, i.e., the axis for which the direction vector of the ray has the component with the largest magnitude, which in this example is the Z axis. A value, z, is shown in Figure 10 which indicates a distance along the major axis (i.e., the Z axis in this example) from the ray origin 1016 to the primitive 1004. The dashed line 1018 in Figure 10 indicates the minimum of the z components of the vertices of the primitive 1004 (relative to the ray origin). The value of z may be taken to be the (non-negative) difference between the z value at the dashed line 1018 and the z value of the ray origin. The value of z may be clamped to zero so that it is not negative, ensuring that the ray space samples are not inverted (corresponding to intersections "behind the camera"). To this end, a $t_{min}$ value of 0 or greater is recommended when using the pseudo-perspective spread. To express this mathematically, $z = \max\{\min\{\text{sgn}(D_z)a_z, \text{sgn}(D_z)b_z, \text{sgn}(D_z)c_z\} - \text{sgn}(D_z)O_z, 0\} = \max\{\min\{\text{sgn}(D_z)(a_z - O_z)\text{sgn}(D_z)(b_z - O_z), \text{sgn}(D_z)(c_z - O_z)\}, 0\}$, where the sign of major component of the ray handles a negative coordinate. Beyond the dashed line 1018 (from the perspective of the ray origin 1016), the sub-samples 1006 and 1008 are considered to be parallel to the primary sample 1002 of the ray. The primary sample of the ray 1002 intersects the primitive 1004 at point 1010; the sub-sample of the ray 1006 intersects the primitive 1004 at point 1012; and the sub-sample of the ray 1008 intersects the primitive 1004 at point 1014.

The z value is used to space the sub-sample points in a pseudo-perspective way. It is pseudo-perspective (rather than true perspective) as it is correct for triangles front on to the ray only. For triangles at a glancing angle to the ray, the sub-sample points will be skewed in some way (e.g., distances are larger on one side of the ray-space origin than the other), although will produce correct results as skewed sub-sample positions (even if they aren't exactly where they would have been with true perspective spread).

The definition of z given above is just one example. In an alternative example, the value of z may be the actual intersection distance of the primary sample of the ray with the primitive (or with the plane of the primitive if the primary sample of the ray misses the primitive). However, as this intersection distance may be a late output calculated in the primitive intersection testing algorithm, using the value of this intersection distance to determine all the sub-sample data may increase the latency (i.e., length of the critical path) of the algorithm significantly. In contrast, the z components of the vertices of the primitive are known before the intersection testing process starts, so setting z to be the minimum of the z components of the vertices of the primitive 1004 relative to the ray origin as described above will not (significantly) increase the latency of the algorithm.

In examples that implement pseudo-perspective spread, the delta values of the intersection attributes (e.g. $\Delta A_0$, $\Delta A_1$, $\Delta A_2$, $\Delta u$, $\Delta v$, $\Delta w$, $\Delta t$) can be calculated as described above in relation to the orthographic spread, but then the values are multiplied by z. For a given ray and primitive pair, the z value acts as a constant scale factor to the sub-sample positions, so when calculating delta values (i.e., the total difference from the origin to the sub-sample position in the **PQ** plane), these values are rescaled by a factor of z. It is worth noting that this does not mean that the absolute values of the intersection attributes at sub-sample positions end up being multiplied by z, as these are calculated by accumulating the rescaled delta values on top of the original intersection attribute value at the primary sample of the ray.

It is noted that uniform scaling of a ray may involve modifying (i.e., rescaling) the ray-space basis vectors to maintain a consistent spread, i.e., consistent separation (in the orthographic case) or consistent angle (in the perspective case). It is also noted that it is cheaper to rescale the ray-basis vectors once per ray and to have integer coordinates in the **PQ** plane for the sub-sample positions, rather than to perform a rescaling for each sub-sample position for each primitive intersection with each ray.

In both the orthographic spread and the pseudo-perspective spread examples, the spread value, $\sigma$, may be set such that the offset of the sub-samples of the ray from the primary sample of the ray is less than an offset between primary samples of different rays corresponding to adjacent pixels of a frame to be rendered. In other words, the offsets of the sub-samples from the primary sample of the ray may be sub-pixel offsets, i.e., offset by less than the offset between primary rays of adjacent pixels. E.g., $\sigma$ may be given to be one half or one third of the minimum offset between two primary rays.

In the examples described above there is a single (strictly positive) spread value, $\sigma$, and the spread is isotropic, i.e., the same in both the direction parallel to the **P** axis and the direction parallel to the **Q** axis. However, other examples may implement anisotropic spread for the ray, wherein two (strictly positive) spread values $\sigma_p$ and $\sigma_q$ are provided. The $\sigma_p$ value may represent the spread of the ray in the direction parallel to the P axis, and the $\sigma_q$ value may represent the spread of the ray in the direction parallel to the Q axis. This allows for an anisotropic spreading of the ray to be implemented, but would require the directions of the **P** and **Q** axes to be exposed, i.e., the relationship between the **P** and **Q** axes and the X, Y and Z axes of the space-coordinate system would need to be known by a user to calculate values for the pair of spread values. The spread values $\sigma_p$ and $\sigma_q$ would be used in the definition of the basis vectors of the ray coordinate system in place of the single spread value described above. For example, in the orthographic spread examples, the scalar values B and C may be defined as $B = \frac{1}{\sigma_p \sqrt{D_x^2 + D_z^2}}$ and $C = \frac{1}{\sigma_q \sqrt{D_y^2 + D_z^2}}$, i.e. the basis vectors **P** and **Q** are defined to be

$P = \frac{1}{\sigma_p \sqrt{D_x^2 + D_z^2}} (D_z, 0, -D_x)$ and $Q = \frac{1}{\sigma_q \sqrt{D_y^2 + D_z^2}} (0, D_z, -D_y)$. In the pseudo-perspective spread examples, the scalar values B and C may be defined as $B = \frac{|D_z|}{\sigma_p \sqrt{D_x^2 + D_z^2}}$ and $C = \frac{|D_z|}{\sigma_q \sqrt{D_y^2 + D_z^2}}$, i.e. the basis vectors **P** and **Q** are defined to be

$P = \frac{|D_z|}{\sigma_p \sqrt{D_x^2 + D_z^2}} (D_z, 0, -D_x)$ and $Q = \frac{|D_z|}{\sigma_q \sqrt{D_y^2 + D_z^2}} (0, D_z, -D_y)$. The methods can then proceed as described above. The spread value(s) may be received as part of the ray data defining the ray. The spread value(s) may be predetermined or may be supplied by a user. It is noted that the spread value of a secondary ray may be derived from the spread value of a primary ray. To give some examples: the spread value could be exactly the same as before (as the ray is reflected/refracted by a surface but is otherwise unmodified); the spread value could increase/decrease for a convex/concave neighbourhood of a surface intersected by the ray; the spread value could change as the ray is passing into the interior of a surface of a different medium; or the spread value could increase due to bouncing off a rough (i.e., diffusing) surface. Furthermore, the spread value of a secondary ray may be defined in terms of the spread value of a primary ray from which the secondary ray is generated, but with modification due to surface curvature or material properties, etc.

In the main examples described above the two non-parallel axes of the ray coordinate system (the **P** and **Q** axes), onto which the vertices of the primitives are projected, are orthogonal to the ray direction vector. As described above, the basis vectors, **P** and **Q,** are defined to be $P = B(D_z, 0, -D_x)$ and $Q = C(0, D_z, -D_y)$. The projection of the vertices of the primitives onto these axes is an orthogonal projection. A vertex, v, of a primitive (after initial translation by the ray origin) has relative coordinates $(v_x, v_y, v_z)$ in the space-coordinate system, and this vertex is projected to a position, w, with coordinates $(w_p, w_q)$ on the two non-parallel axes of the ray coordinate system. The projection is parallel to the ray direction, and in the main examples described above P and Q are orthogonal to D. This projection can be explicitly given by calculating $w_p = P. \, v = B(D_z v_x - D_x v_z)$ and $w_q = Q. \, v = C(D_z v_y - D_y v_z)$.

However, in other examples, the two non-parallel axes of the ray coordinate system, onto which the vertices of the primitives are projected, are not orthogonal to the ray direction vector. The projection of the vertices of the primitives onto these axes is an oblique projection. This projection is parallel to the ray direction (similar to the orthogonal projection described in the preceding paragraph). For example, the two non-parallel axes may be the **X** and **Y** axes, and it is noted that the **X** and **Y** axes are not generally orthogonal to **D** (although **D** doesn't lie in the **XY** plane, by definition of the major axis **Z**). The projection of the vertex, $v = (v_x, v_y, v_z)$, can be explicitly given by finding what point $w = (w_x, w_y)$ this back projects onto in the **XY** plane. In other words, we need to find where $z = 0$ along the line $v - tD$. This is exactly where $v_z = tD_z$, i.e., where

$t = \frac{v_z}{D_z}$ (where it is noted that $D_z$ cannot be zero). This value of $t$ can be used to find the projected coordinates in the **XY**

plane as $w_x = v_x - \left(\frac{v_z}{D_z}\right) D_x = \frac{1}{D_z} (D_z v_x - D_x v_z)$ and $w_y = v_y - \left(\frac{v_z}{D_z}\right) D_y = \frac{1}{D_z} (D_z v_y - D_y v_z)$. It can be seen that these equations for $w_x$ and $w_y$ are the same as the equations given in the preceding paragraph for $w_p$ and $w_q$, with $B = C = \frac{1}{D_z}$. As such, the results of the calculations in the two examples given in this paragraph and the preceding paragraph are the same, but the description of the 2D basis vectors is different (and for the example given in this paragraph they are not necessarily orthogonal to the ray), and we use a different projection. In both examples, the direction of projection remains the same (so that what the ray "sees" is accurate), even if the plane onto which the projection is made changes. The rest of the methods described above in relation to the examples involving an orthogonal projection onto the **PQ** plane can be applied in the same way in examples involving an oblique projection, e.g., onto the **XY** plane.

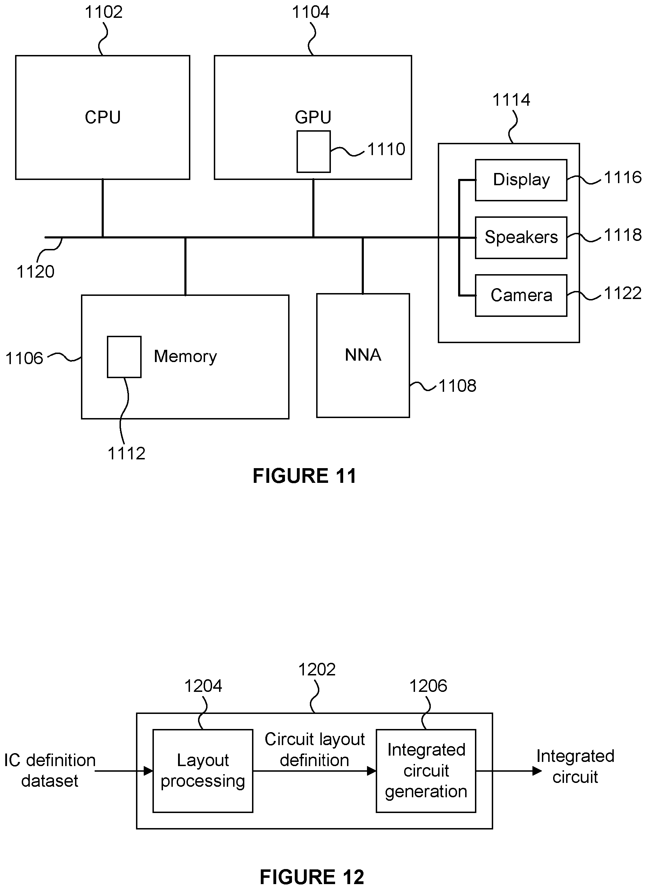

Figure 11 shows a computer system in which the ray tracing units described herein may be implemented. The computer system comprises a CPU 1102, a GPU 1104, a memory 1106, a neural network accelerator (NNA) 1108 and other devices 1114, such as a display 1116, speakers 1118 and a camera 1122. A processing block 1110 (corresponding to the ray tracing unit 102) is implemented on the GPU 1104. In other examples, one or more of the depicted components may be omitted from the system, and/or the processing block 1110 may be implemented on the CPU 1102 or within the NNA 1108. The components of the computer system can communicate with each other via a communications bus 1120. A store 1112 (corresponding to memory 104) is implemented as part of the memory 1106.

The ray tracing unit 102 of Figure 1 is shown as comprising a number of functional blocks. This is schematic only and is not intended to define a strict division between different logic elements of such entities. Each functional block may be provided in any suitable manner. It is to be understood that intermediate values described herein as being formed by a ray tracing unit need not be physically generated by the ray tracing unit at any point and may merely represent logical values which conveniently describe the processing performed by the ray tracing unit between its input and output.

The ray tracing units described herein may be embodied in hardware on an integrated circuit. The ray tracing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a ray tracing unit configured to perform any of the methods described herein, or to manufacture a ray tracing unit comprising any apparatus described herein. An integrated circuit definition dataset may be, for example, an integrated circuit description.

Therefore, there may be provided a method of manufacturing, at an integrated circuit manufacturing system, a ray tracing unit as described herein. Furthermore, there may be provided an integrated circuit definition dataset that, when processed in an integrated circuit manufacturing system, causes the method of manufacturing a ray tracing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a ray tracing unit will now be described with respect to Figure 12.

Figure 12 shows an example of an integrated circuit (IC) manufacturing system 1202 which is configured to manufacture a ray tracing unit as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a ray tracing unit as described in any of the examples herein), process the IC definition dataset, and generate an IC according to the IC definition dataset (e.g. which embodies a ray tracing unit as described in any of the examples herein). The processing of the IC definition dataset configures the IC manufacturing system 1202 to manufacture an integrated circuit embodying a ray tracing unit as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a ray tracing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of performing intersection testing, in a ray tracing system, for a ray with respect to a primitive, the method comprising:

   determining a value of one or more intersection attributes for a primary sample of the ray relating to an intersection between the ray and the primitive in a ray coordinate system, wherein the ray coordinate system has two non-parallel axes that are both transverse to the direction of the ray, and wherein an origin of the ray coordinate system is on the ray;
   for one or both of the two non-parallel axes of the ray coordinate system, determining data indicating a change to the one or more intersection attributes in a direction parallel to that axis; and
   processing the intersection between the ray and the primitive using the determined value of the one or more intersection attributes for the primary sample of the ray and the determined data indicating a change to the one or more intersection attributes in one or both of the directions parallel to the two non-parallel axes.

2. The method of claim 1 wherein the one or more intersection attributes comprise one or more of: (i) one or more barycentric coordinates, (ii) one or more areal coordinates, and (iii) an intersection distance.

3. The method of claim 1 or 2 wherein for each of said one or both of the two non-parallel axes of the ray coordinate system, the data indicating a change to the one or more intersection attributes in a direction parallel to that axis comprises a rate of change for each of the one or more intersection attributes in the direction parallel to that axis.

4. The method of claim 3 wherein the one or more intersection attributes comprise one or more barycentric coordinates, and wherein said processing the intersection between the ray and the primitive comprises using the rate of change for each of the one or more barycentric coordinates in one or both of the directions parallel to said one or both of the two non-parallel axes to determine a Level of Detail (LOD) for the primitive,
   optionally wherein said processing the intersection between the ray and the primitive comprises:

   using the determined Level of Detail for the primitive to select a mipmap level of a texture; and
   applying the texture, at the selected mipmap level, to the primitive.

5. The method of claim 3 or 4 wherein the one or more intersection attributes comprise two barycentric coordinates, and wherein the rates of change of the barycentric coordinates in the directions parallel to the two non-parallel axes are given by:

$$\frac{\partial u}{\partial p} = \frac{b_q - c_q}{A_\Sigma}$$

$$\frac{\partial u}{\partial q} = \frac{c_p - b_p}{A_\Sigma}$$

$$\frac{\partial v}{\partial p} = \frac{c_q - a_q}{A_\Sigma}$$

$$\frac{\partial v}{\partial q} = \frac{a_p - c_p}{A_\Sigma}$$

where (u, v) are the barycentric coordinates, p and q are coordinates on the two non-parallel axes, $(a_p, a_q)$ are coordinates on the two non-parallel axes for a first vertex of the primitive, $(b_p, b_q)$ are coordinates on the two non-parallel axes for a second vertex of the primitive, $(c_p, c_q)$ are coordinates on the two non-parallel axes for a third vertex of the primitive, and $A_\Sigma$ represents an area of the primitive in the ray coordinate system.

6. The method of any of claims 3 to 5 wherein the one or more intersection attributes comprise an intersection distance, and wherein the rates of change of the intersection distance in the directions parallel to the two non-parallel axes are given by:

$$\frac{\partial t}{\partial p} = \frac{\frac{\partial u}{\partial p}a_z + \frac{\partial v}{\partial p}b_z + \frac{\partial w}{\partial p}c_z}{D_z}$$

$$\frac{\partial t}{\partial q} = \frac{\frac{\partial u}{\partial q}a_z + \frac{\partial v}{\partial q}b_z + \frac{\partial w}{\partial q}c_z}{D_z}$$

where t is the intersection distance, p and q are coordinates on the two non-parallel axes, (u, v) are barycentric coordinates relating to the intersection between the ray and the primitive, $D_z$ is a component having the largest magnitude of the components of a ray direction vector for the ray in a space-coordinate system in which the primitive is defined, $a_z$ is a coordinate for a first vertex of the primitive in the same dimension of the space-coordinate system as $D_z$, $b_z$ is a coordinate for a second vertex of the primitive in the same dimension of the space-coordinate system as $D_z$, and $c_z$ is a coordinate for a third vertex of the primitive in the same dimension of the space-coordinate system as $D_z$.

7. The method of any preceding claim wherein for each of said one or both of the two non-parallel axes of the ray coordinate system, the data indicating a change to the one or more intersection attributes in a direction parallel to that axis comprises a value of each of the one or more intersection attributes for a sub-sample of the ray relating to the intersection between the ray and the primitive, the sub-sample of the ray being offset from the primary sample of the ray in the direction parallel to that axis,
optionally wherein said processing the intersection between the ray and the primitive comprises using the one or more intersection attributes for the sub-sample of the ray to determine whether the sub-sample of the ray hits the primitive.

8. The method of claim 7 wherein the value of each of the one or more intersection attributes for the sub-sample of the ray is determined by applying one or more logical operations to the value of a corresponding one of the one or more intersection attributes determined for the primary sample of the ray, wherein the one or more logical operations comprise: (i) one or more addition operations, (ii) one or more subtraction operations, and/or (iii) one or more multiplication operations.

9. The method of claim 7 or 8 further comprising:

determining values of the one or more intersection attributes for a plurality of sub-samples of the ray at different offsets from the primary sample of the ray;
determining whether each of the samples of the ray hits the primitive based on the determined values of the one or more intersection attributes for that sample of the ray; and
using the determinations of whether each of the samples of the ray hits the primitive to determine an output value representing an intersection of the ray with scene geometry, wherein the intersection of the ray with the scene geometry comprises the intersection between the ray and the primitive, and
wherein the samples of the ray comprise the primary sample and the plurality of sub-samples of the ray,
optionally wherein said using the determinations of whether each of the samples of the ray hits the primitive to determine an output value representing an intersection of the ray with scene geometry comprises:

for each of the samples of the ray that are determined to hit the primitive, determining a contribution from the primitive to the output value; and
using the determined contributions for the samples of the ray that are determined to hit the primitive to determine the output value representing the intersection of the ray with the scene geometry.

10. The method of claim 9 wherein the one or more intersection attributes comprise a plurality of areal coordinates,

wherein said determining values of the one or more intersection attributes for a plurality of sub-samples of the ray comprises determining at least two areal coordinates for each of the plurality of sub-samples by adding and/or subtracting values to and/or from the corresponding areal coordinates determined for the primary sample of the ray, and

wherein said determining whether each of the samples of the ray hits the primitive comprises determining whether each of the samples of the ray hits the primitive based on the signs of the areal coordinates determined for the sample,

optionally wherein:

the areal coordinates for the primary sample, $(A_0, A_1A_2)$, are given by:

$$A_0 = b_p c_q - b_q c_p$$

$$A_1 = c_p a_q - c_q a_p$$

$$A_2 = a_p b_q - a_q b_p$$

and the areal coordinates for a sub-sample $(A'_0, A'_1 A'_2)$ are given by:

$$A'_0 = A_0 + p'(b_q - c_q) + q'(c_p - b_p)$$

$$A'_1 = A_1 + p'(c_q - a_q) + q'(a_p - c_p)$$

$$A'_2 = A_2 + p'(a_q - b_q) + q'(b_p - a_p)$$

where p' and q' represent the offset of the sub-sample relative to the primary sample on the two non-parallel axes, $(a_p, a_q)$ are coordinates on the two non-parallel axes for a first vertex of the primitive, $(b_p, b_q)$ are coordinates on the two non-parallel axes for a second vertex of the primitive, and $(c_p, c_q)$ are coordinates on the two non-parallel axes for a third vertex of the primitive.

11. The method of claim 9 or 10 wherein either:

the plurality of sub-samples of the ray comprises four sub-samples of the ray at respective offsets of (-1,0), (+1,0), (0,-1) and (0,+1) from the primary sample of the ray in the ray coordinate system; or
the plurality of sub-samples of the ray comprises eight sub-samples of the ray at respective offsets of (-1,-1), (-1,0), (-1,+1), (0,-1), (0,+1), (+1,-1), (+1,0) and (+1,+1) from the primary sample of the ray in the ray coordinate system.

12. The method of any of claims 7 to 11 wherein a spread value for the ray is used to determine the offset of the sub-sample of the ray from the primary sample of the ray, optionally wherein the spread value represents an orthographic spread or a pseudo-perspective spread of the ray.

13. A ray tracing unit configured to perform the method of any of claims 1 to 12.

14. Computer readable code configured to cause the method of any of claims 1 to 12 to be performed when the code is run.

15. A computer readable storage medium having stored thereon an integrated circuit definition dataset that, when processed in an integrated circuit manufacturing system, configures the integrated circuit manufacturing system to manufacture a ray tracing unit as claimed in claim 13.

**Amended claims in accordance with Rule 137(2) EPC.**

1. A method of performing intersection testing, in a ray tracing system (100), for a ray (302) with respect to a primitive (304), the method comprising:

determining a value of one or more intersection attributes for a primary sample (502) of the ray relating to an intersection between the ray (302) and the primitive (304) in a ray coordinate system, wherein the one or more intersection attributes describe one or more properties of the intersection between the ray (302) and the primitive (304), and wherein the ray coordinate system has two non-parallel axes that are both transverse to the direction of the ray (302), and wherein an origin of the ray coordinate system is on the ray (302);

for one or both of the two non-parallel axes of the ray coordinate system, determining data indicating a change to the one or more intersection attributes in a direction parallel to that axis; and

processing the intersection between the ray (302) and the primitive (304) using the determined value of the one or more intersection attributes for the primary sample (502) of the ray and the determined data indicating a change to the one or more intersection attributes in one or both of the directions parallel to the two non-parallel axes.

2. The method of claim 1 wherein the one or more intersection attributes comprise one or more of: (i) one or more barycentric coordinates, (ii) one or more areal coordinates, and (iii) an intersection distance.

3. The method of claim 1 or 2 wherein for each of said one or both of the two non-parallel axes of the ray coordinate system, the data indicating a change to the one or more intersection attributes in a direction parallel to that axis comprises a rate of change for each of the one or more intersection attributes in the direction parallel to that axis.

4. The method of claim 3 wherein the one or more intersection attributes comprise one or more barycentric coordinates, and wherein said processing the intersection between the ray (302) and the primitive (304) comprises using the rate of change for each of the one or more barycentric coordinates in one or both of the directions parallel to said one or both of the two non-parallel axes to determine a Level of Detail (LOD) for the primitive,

optionally wherein said processing the intersection between the ray (302) and the primitive (304) comprises:

using the determined Level of Detail for the primitive to select a mipmap level of a texture; and
applying the texture, at the selected mipmap level, to the primitive (304).

5. The method of claim 3 or 4 wherein the one or more intersection attributes comprise two barycentric coordinates, and wherein the rates of change of the barycentric coordinates in the directions parallel to the two non-parallel axes are given by:

$$\frac{\partial u}{\partial p} = \frac{b_q - c_q}{A_\Sigma}$$

$$\frac{\partial u}{\partial q} = \frac{c_p - b_p}{A_\Sigma}$$

$$\frac{\partial v}{\partial p} = \frac{c_q - a_q}{A_\Sigma}$$

$$\frac{\partial v}{\partial q} = \frac{a_p - c_p}{A_\Sigma}$$

where $(u, v)$ are the barycentric coordinates, $p$ and $q$ are coordinates on the two non-parallel axes, $(a_p, a_q)$ are coordinates on the two non-parallel axes for a first vertex of the primitive (304), $(b_p, b_q)$ are coordinates on the two non-parallel axes for a second vertex of the primitive (304), $(c_p, c_q)$ are coordinates on the two non-parallel axes for a third vertex of the primitive (304), and $A_\Sigma$ represents an area of the primitive in the ray coordinate system.

6. The method of any of claims 3 to 5 wherein the one or more intersection attributes comprise an intersection distance, and wherein the rates of change of the intersection distance in the directions parallel to the two non-parallel axes are given by:

$$\frac{\partial t}{\partial p} = \frac{\frac{\partial u}{\partial p} a_z + \frac{\partial v}{\partial p} b_z + \frac{\partial w}{\partial p} c_z}{D_z}$$

$$\frac{\partial t}{\partial q} = \frac{\frac{\partial u}{\partial q} a_z + \frac{\partial v}{\partial q} b_z + \frac{\partial w}{\partial q} c_z}{D_z}$$

where t is the intersection distance, p and q are coordinates on the two non-parallel axes, (u, v) are barycentric coordinates relating to the intersection between the ray (302) and the primitive (304), $D_z$ is a component having the largest magnitude of the components of a ray direction vector for the ray in a space-coordinate system in which the primitive (304) is defined, $a_z$ is a coordinate for a first vertex of the primitive (304) in the same dimension of the space-coordinate system as $D_z$, $b_z$ is a coordinate for a second vertex of the primitive (304) in the same dimension of the space-coordinate system as $D_z$, and $c_z$ is a coordinate for a third vertex of the primitive (304) in the same dimension of the space-coordinate system as $D_z$.

7. The method of any preceding claim wherein for each of said one or both of the two non-parallel axes of the ray coordinate system, the data indicating a change to the one or more intersection attributes in a direction parallel to that axis comprises a value of each of the one or more intersection attributes for a sub-sample (504, 506) of the ray relating to the intersection between the ray (302) and the primitive (304), the sub-sample (504, 506) of the ray being offset from the primary sample (502) of the ray in the direction parallel to that axis,
optionally wherein said processing the intersection between the ray (302) and the primitive (304) comprises using the one or more intersection attributes for the sub-sample (504, 506) of the ray to determine whether the sub-sample (504, 506) of the ray hits the primitive (304).

8. The method of claim 7 wherein the value of each of the one or more intersection attributes for the sub-sample (504, 506) of the ray is determined by applying one or more logical operations to the value of a corresponding one of the one or more intersection attributes determined for the primary sample (502) of the ray, wherein the one or more logical operations comprise: (i) one or more addition operations, (ii) one or more subtraction operations, and/or (iii) one or more multiplication operations.

9. The method of claim 7 or 8 further comprising:

    determining values of the one or more intersection attributes for a plurality of sub-samples (504, 506) of the ray at different offsets from the primary sample (502) of the ray;
    determining whether each of the samples of the ray (302) hits the primitive (304) based on the determined values of the one or more intersection attributes for that sample of the ray (302); and
    using the determinations of whether each of the samples of the ray (302) hits the primitive (304) to determine an output value representing an intersection of the ray (302) with scene geometry, wherein the intersection of the ray (302) with the scene geometry comprises the intersection between the ray (302) and the primitive (304), and wherein the samples of the ray (302) comprise the primary sample (502) and the plurality of sub-samples (504, 506) of the ray,
    optionally wherein said using the determinations of whether each of the samples of the ray (302) hits the primitive to determine an output value representing an intersection of the ray (302) with scene geometry comprises:

        for each of the samples of the ray (302) that are determined to hit the primitive (304), determining a contribution from the primitive (304) to the output value; and
        using the determined contributions for the samples of the ray (302) that are determined to hit the primitive (304) to determine the output value representing the intersection of the ray (302) with the scene geometry.

10. The method of claim 9 wherein the one or more intersection attributes comprise a plurality of areal coordinates,

    wherein said determining values of the one or more intersection attributes for a plurality of sub-samples (504, 506) of the ray comprises determining at least two areal coordinates for each of the plurality of sub-samples by adding and/or subtracting values to and/or from the corresponding areal coordinates determined for the primary sample (502) of the ray, and
    wherein said determining whether each of the samples of the ray (302) hits the primitive (304) comprises determining whether each of the samples of the ray (302) hits the primitive (304) based on the signs of the areal coordinates determined for the sample,
    optionally wherein:

the areal coordinates for the primary sample (502), $(A_0, A_1 A_2)$, are given by:

$$A_0 = b_p c_q - b_q c_p$$

$$A_1 = c_p a_q - c_q a_p$$

$$A_2 = a_p b_q - a_q b_p$$

and the areal coordinates for a sub-sample (504, 506) $(A'_0, A'_1 A'_2)$ are given by:

$$A'_0 = A_0 + p'\left(b_q - c_q\right) + q'\left(c_p - b_p\right)$$

$$A'_1 = A_1 + p'\left(c_q - a_q\right) + q'\left(a_p - c_p\right)$$

$$A'_2 = A_2 + p'\left(a_q - b_q\right) + q'\left(b_p - a_p\right)$$

where $p'$ and $q'$ represent the offset of the sub-sample (504, 506) relative to the primary sample (502) on the two non-parallel axes, $(a_p, a_q)$ are coordinates on the two non-parallel axes for a first vertex of the primitive (304), $(b_p, b_q)$ are coordinates on the two non-parallel axes for a second vertex of the primitive (304), and $(c_p, c_q)$ are coordinates on the two non-parallel axes for a third vertex of the primitive (304).

11. The method of claim 9 or 10 wherein either:

    the plurality of sub-samples of the ray comprises four sub-samples of the ray at respective offsets of (-1,0), (+1,0), (0,-1) and (0,+1) from the primary sample of the ray in the ray coordinate system; or
    the plurality of sub-samples of the ray comprises eight sub-samples of the ray at respective offsets of (-1,-1), (-1,0), (-1,+1), (0,-1), (0,+1), (+1,-1), (+1,0) and (+1,+1) from the primary sample of the ray in the ray coordinate system.

12. The method of any of claims 7 to 11 wherein a spread value for the ray is used to determine the offset of the sub-sample (504, 506) of the ray from the primary sample (502) of the ray, optionally wherein the spread value represents an orthographic spread or a pseudo-perspective spread of the ray (302).

13. A ray tracing unit (102) configured to perform the method of any of claims 1 to 12.

14. Computer readable code configured to cause the method of any of claims 1 to 12 to be performed when the code is run.

15. A computer readable storage medium having stored thereon an integrated circuit definition dataset that, when processed in an integrated circuit manufacturing system (1202), configures the integrated circuit manufacturing system to manufacture a ray tracing unit (102) as claimed in claim 13.

100

102

104

106 — Processing module

108 — Intersection testing module

Memory

110 — Processing logic

Ray tracing unit

**FIGURE 1**

Obtain coordinate data for vertices of the primitive in the ray coordinate system $\quad$ S202

Determine value(s) of intersection attribute(s) for primary sample of the ray $\quad$ S204

Determine data, for one or both of the $P$ and $Q$ axes of the ray coordinate system, indicating a change to the intersection attribute(s) in a direction parallel to that axis $\quad$ S206

Process the intersection between the ray and the primitive $\quad$ S208

**FIGURE 2**

**FIGURE 3**

**FIGURE 4**

**FIGURE 5**

**FIGURE 6**

**FIGURE 7**

From S206

S208

Determine values of the intersection attribute(s) for a plurality of sub-samples of the ray

S802

Determine whether each of the samples of the ray hits the primitive

S804

Determine an output value representing an intersection of the ray and scene geometry

S806

**FIGURE 8**

912

904    910

902    908

906    914

**FIGURE 9**

Major axis

1012

1004    1010

1018

1002
1006
1008
1016

z

1014

**FIGURE 10**

1102 1104

1114

CPU

GPU

1110

Display 1116

Speakers 1118

1120

Camera 1122

1106 Memory

NNA

1108

1112

**FIGURE 11**

1204 1202 1206

IC definition dataset

Layout processing

Circuit layout definition

Integrated circuit generation

Integrated circuit

**FIGURE 12**

## EUROPEAN SEARCH REPORT

Europäisches
Patentamt
European
Patent Office
Office européen
des brevets

**Application Number**

EP 25 15 0294

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/287421 A1 (SALEH SKYLER JONATHON [US] ET AL) 16 September 2021 (2021-09-16) * abstract * * paragraphs [0053] - [0057]; figure 7 * ----- | 1-15 | INV. G06T15/06 |
| X | GB 2 599 187 A (IMAGINATION TECH LTD [GB]) 30 March 2022 (2022-03-30) | 1,13-15 | |
| A | * abstract * * paragraph [0192]; figure 10 * ----- | 2-12 | |

**TECHNICAL FIELDS SEARCHED (IPC)**

G06T

The present search report has been drawn up for all claims

| Place of search | Date of completion of the search | Examiner |
|---|---|---|
| Berlin | 31 January 2025 | Bouchaâla, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 0294

This annex lists the patent family members relating to the patent documents cited in  the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| US 2021287421 A1 | 16-09-2021 | CN | 115210766 A | 18-10-2022 |
| | | EP | 4118625 A1 | 18-01-2023 |
| | | JP | 2023516982 A | 21-04-2023 |
| | | KR | 20220154706 A | 22-11-2022 |
| | | US | 2021287421 A1 | 16-09-2021 |
| | | WO | 2021183349 A1 | 16-09-2021 |
| GB 2599187 A | 30-03-2022 | CN | 115115760 A | 27-09-2022 |
| | | EP | 4064201 A2 | 28-09-2022 |
| | | GB | 2599187 A | 30-03-2022 |
| | | US | 2022351459 A1 | 03-11-2022 |
| | | US | 2025037349 A1 | 30-01-2025 |

EPO FORM P0459

For more details about this annex : see Official Journal of the European Patent Office, No. 12/82

**REFERENCES CITED IN THE DESCRIPTION**

**Patent documents cited in the description**

- GB 2400246 A